# EUROPEAN PATENT SPECIFICATION

(11) **EP 2 982 582 B1**
(45) Date of publication and mention of the grant of the patent: **24.01.2018**
(21) Application number: 15744056.1
(22) Date of filing: 30.01.2015
(51) Int. Cl.: B62K 5/05, B62K 5/08, B62K 5/10, B62H 1/04, B62K 5/027

(54) **VEHICLE**
FAHRZEUG
VÉHICULE

(30) Priority: 31.01.2014 JP 2014017255
(43) Date of publication of application: 10.02.2016
(73) Proprietor: Yamaha Hatsudoki Kabushiki Kaisha, Iwata-shi, Shizuoka 438-8501 (JP)
(72) Inventor: TAKANO, Kazuhisa, Iwata-shi, Shizuoka 438-8501 (JP); TOMIMATSU, Masahiro, Iwata-shi, Shizuoka 438-8501 (JP)
(74) Representative: Grünecker Patent- und Rechtsanwälte PartG mbB
(86) International application number: PCT/JP2015/000410
(87) International publication number: WO 2015/115107

(56) References cited:
- WO-A1-2012/007819
- JP-A- 2007 223 538
- JP-A- 2009 202 719
- JP-A- 2012 056 503
- US-A- 4 145 069
- US-A- 4 671 374
- US-A- 4 697 663
- US-A1- 2007 040 351
- US-A1- 2010 013 186

## Description

The present invention relates to a vehicle according to the preamble of independent claim 1. Such a vehicle can be taken from the prior art document WO 2012/007819 A1.

Prior art document US 4,697,663 discloses a vehicle with three wheels that includes a single rear driven wheel and two front steerable wheels. The front wheels are supported by cross members in a parallelogram mechanism carried by the frame of the vehicle. A platform is connected to the frame and extends rearwardly of the cross members on both sides of the lower cross member. A U-shaped center stand is pivotally connected to the platform an axis extending perpendicularly to the longitudinal axis of the vehicle. The center stand in its deployed supporting position also engages the vehicle frame for keeping the vehicle upright.

A vehicle including: a body frame that tilts in a left-right direction of the vehicle during left and right turns; and two front wheels disposed side by side in the left-right direction of the body frame is known (for example, see Patent Literature (hereinafter, referred to as "PTL") 1 and Non-Patent Literature (hereinafter, referred to as "NPL") 1). This type of vehicle is a vehicle that can turn while the body frame tilts relative to a vertical direction. More specifically, the body frame tilts to the right of the vehicle during the right turn and to the left of the vehicle during the left turn.

The vehicle described in PTL 1 and NPL 1 includes link mechanisms. The link mechanism includes an upper cross member and a lower cross member. The link mechanism also includes: a right-side rod that supports right end portions of the upper cross member and the lower cross member; and a left-side rod that supports left end portions of the upper cross member and the lower cross member. An intermediate portion of the upper cross member and an intermediate portion of the lower cross member are supported by the body frame. The upper cross member and the lower cross member are supported by the body frame so as to be capable of turning (hereinafter, referred to as "turnable") around an axis extending substantially in the front-rear direction of the body frame. The upper cross member and the lower cross member turn relative to the body frame in conjunction with tilting of the body frame that is tilting, and the relative position of the left front wheel and the right front wheel in the up-down direction of the body frame changes. The upper cross member and the lower cross member are disposed above the left front wheel and the right front wheel in the up-down direction of the body frame, when the body frame is in an upright state.

The vehicle including the body frame capable of tilting (hereinafter, referred to as "tiltable"), the left front wheel and the right front wheel includes a right shock absorber that supports the right front wheel movably in the up-down direction of the body frame and a left shock absorber that supports the left front wheel movably in the up-down direction of the body frame. The right shock absorber is supported by the right-side rod so as to be rotatable around the axis of the right-side rod. The left shock absorber is supported by the left-side rod so as to be rotatable around the axis of the left-side rod. The vehicle described in PTL I further includes a handlebar, a steering shaft, and a turn transmission mechanism. The handlebar is fixed to the steering shaft. The steering shaft is supported so as to be turnable relative to the body frame. The steering shaft also turns when the handlebar is turned. The turn transmission mechanism transmits the turning of the steering shaft to the right shock absorber and the left shock absorber.

The vehicle including the tiltable body frame, the left front wheel, and the right front wheel often includes a center stand. In the vehicles disclosed in PTL 2 and NPL 1, the center stands are attached to power units. The power unit is supported by the body frame so as to swing relative to the body frame together with the rear wheel.

### Citation List

### Patent Literature

PTL 1 Japanese Patent Application Laid-Open No. 2005-313876
PTL 2 U.S. Design Patent No. D547, 242S

### Non-Patent Literature

NPL 1 Catalogo parti di ricambio, MP3 300 ie LT Mod. ZAPM64102, Piaggio & C. SpA

In the vehicle disclosed in PTL 2, the center stand is disposed so as to be switchable to a use position where the center stand supports the vehicle. The center stand includes a pedal.

An operation method of the conventional center stand will be described. The user first stands by the vehicle. The user holds the front part of the vehicle using one hand and holds the rear part of the vehicle using the other hand to support the vehicle. The user then lifts the rear part of the vehicle upward while applying a load to the pedal by a foot. Accordingly, the center stand is switchable to the use position.

An object of the present invention is to provide, a vehicle as indicated above that allows handling different from when the conventional center stand is used.

According to the present invention said object is solved by a vehicle having the features of independent claim 1. Preferred embodiments are laid down in the dependent claims.

### Solution to Problem

A vehicle according to an aspect of the present invention (hereinafter, referred to as a vehicle according to a first aspect) includes: a body frame; a right front wheel and a left front wheel disposed side by side in a left-right direction of the body frame; a right-front-wheel support unit including an upper portion and a lower portion that supports the right front wheel; a left-front-wheel support unit including an upper portion and a lower portion that supports the left front wheel; a link mechanism including a right-side rod that supports the upper portion of the right-front-wheel support unit in a manner that makes the upper portion thereof turnable around a right axis extending in an up-down direction of the body frame, a left-side rod that supports the upper portion of the left-front-wheel support unit in a manner that makes the upper portion thereof turnable around a left axis which is parallel to the right axis, an upper cross member including a right end portion that supports an upper part of the right-side rod in a manner that makes the upper part thereof turnable, a left end portion that supports an upper part of the left-side rod in a manner that makes the upper part thereof turnable, and an intermediate portion that is supported by the body frame so as to be turnable around an upper axis extending in a front-rear direction of the body frame, and a lower cross member including a right end portion that supports a lower part of the right-side rod in a manner that makes the lower part thereof turnable, a left end portion that supports a lower part of the left-side rod in a manner that makes the lower part thereof turnable, and an intermediate portion that is supported by the body frame so as to be turnable around a lower axis which is parallel to the upper axis, a steering shaft including an upper end portion formed above the lower axis that is a turning axis of the lower cross member in the up-down direction of the body frame, the steering shaft being supported between the right-side rod and the left-side rod in the left-right direction of the body frame so as to be turnable around an axis extending in the up-down direction of the body frame relative to the body frame; a handlebar that turns the steering shaft; a turn transmission mechanism that transmits the turning of the steering shaft according to the turning of the handlebar to the right shock absorber and the left shock absorber; a rear wheel; a power unit that generates driving force of the rear wheel; and a center stand including a right grounding portion and a left grounding portion disposed respectively on the right and left of centers of the right front wheel and the left front wheel facing a direction parallel to the front-rear direction of the body frame in a plan view with the body frame in an upright state, the center stand being supported so as to be turnable relative to the body frame and being switchable between a use position in which the right grounding portion and the left grounding portion are grounded and a retracted position in which the right grounding portion and the left grounding portion are separated from the ground, in which the center stand is disposed so that at least the right grounding portion, the left grounding portion, and the rear wheel are grounded when the center stand is in the use position.

According to the present invention, in the vehicle including: the tiltable body frame; the left front wheel; and the right front wheel, the center stand is disposed so that at least the left grounding portion, the right grounding portion, and the rear wheel are on the ground when the center stand is in the use position. Therefore, in the vehicle including the tiltable body frame, the left front wheel, and the right front wheel, the center stand can be used to support the vehicle in a mode different from when the conventional center stand is used.

The present invention may also adopt the following aspects.

A vehicle according to a second aspect is the vehicle according to the first aspect, in which, when the center stand is in the use position, the right grounding portion and the left grounding portion of the center stand are disposed forward of a center among a lower end of the right front wheel, a lower end of the left front wheel, and a rear wheel grounding portion in the front-rear direction of the body frame, the rear wheel grounding portion being where the rear wheel is grounded.

According to the second aspect, in the vehicle including the tiltable body frame, the left front wheel, and the right front wheel, the center stand can be disposed so that the left and right grounding portions of the center stand and the rear wheel are grounded when the center stand is in the use position. Therefore, in the vehicle including the tiltable body frame, the left front wheel, and the right front wheel, the center stand can be used to support the vehicle in a mode different from when the conventional center stand is used.

A vehicle according to a third aspect is the vehicle according to the first aspect, in which, when the center stand is in the use position, the right grounding portion and the left grounding portion of the center stand are disposed forward of a center of gravity of the vehicle without a rider on the vehicle in the front-rear direction of the body frame.

According to the third aspect, in the vehicle including the tiltable body frame, the left front wheel, and the right front wheel, the center stand can be disposed so that the left and right grounding portions of the center stand and the rear wheel are grounded when the center stand is in the use position. Therefore, in the vehicle including the tiltable body frame, the left front wheel, and the right front wheel, the center stand can be used to support the vehicle in a mode different from when the conventional center stand is used.

A vehicle according to a fourth aspect is the vehicle according to the first aspect, in which the right front wheel is grounded at a right front wheel grounding portion when the center stand is in the use position, while the left front wheel is grounded at a left front wheel grounding portion when the center stand is in the use position, when the center stand is in the use position, the right grounding portion of the center stand is disposed on the right of a right grounding virtual straight line connecting a front end of a grounding portion of the rear wheel and a left end of the right front wheel grounding portion in the left-right direction of the body frame in a plan view with the body frame in the upright state, and the left grounding portion of the center stand is disposed on the left of a left grounding virtual straight line connecting the front end of the grounding portion of the rear wheel and a right end of the left front wheel grounding portion in the left-right direction of the body frame.

According to the fourth aspect, in the vehicle including the tiltable body frame, the left front wheel, and the right front wheel, the center stand is disposed so that the vehicle is grounded with at least three points: the right grounding portion disposed on the right of the right grounding virtual straight line connecting the front end of the grounding portion of the rear wheel and the left end of the grounding portion of the right front wheel in the left-right direction of the body frame; the left grounding portion disposed on the left of the left grounding virtual straight line connecting the front end of the grounding portion of the rear wheel and the right end of the grounding portion of the left front wheel; and the rear wheel. Therefore, in the vehicle including the tiltable body frame, the left front wheel, and the right front wheel, the center stand can be used to support the vehicle in a mode different from when the conventional center stand is used.

A vehicle according to a the present invention (fifth aspect) is the vehicle according to the first aspect, in which, when the center stand is in the use position, the right grounding portion of the center stand is disposed on the right of a right end portion virtual straight line connecting a front end of a grounding portion of the rear wheel and a center left end of the right front wheel in the left-right direction of the body frame in a plan view with the body frame in the upright state, and the left grounding portion of the center stand is disposed on the left of a left end portion virtual straight line connecting the front end of the grounding portion of the rear wheel and a center right end of the left front wheel in the left-right direction of the body frame in a plan view.

According to the present invention (fifth aspect), in the vehicle including the tiltable body frame, the left front wheel, and the right front wheel, the center stand is disposed so that the vehicle is grounded with at least three points: the right grounding portion disposed on the right of the right end portion virtual straight line in the left-right direction of the body frame; the left grounding portion disposed on the left of the left end portion virtual straight line; and the rear wheel. Therefore, in the vehicle including the tiltable body frame, the left front wheel, and the right front wheel, the center stand can be used to support the vehicle in a mode different from when the conventional center stand is used.

A vehicle according to a sixth aspect is the vehicle according to the first aspect, in which the body frame includes: a link support that supports the link mechanism; a down frame extending downward from the link support; and an underframe extending backward from the down frame, at least part of the down frame and the underframe includes a left frame portion and a right frame portion disposed side by side in the left-right direction of the body frame, and when the center stand is in the use position, the right grounding portion of the center stand is disposed on the right of the right frame portion in the left-right direction of the body frame, and the left grounding portion of the center stand is disposed on the left of the left frame portion in the left-right direction of the body frame in a plan view.

According to the sixth aspect, in the vehicle including the tiltable body frame, the left front wheel, and the right front wheel, the center stand is disposed so that the vehicle is grounded with at least three points: the right grounding portion disposed on the right of the right frame portion in the left-right direction of the body frame; the left grounding portion disposed on the left of the left frame portion; and the rear wheel. Therefore, in the vehicle including the tiltable body frame, the left front wheel, and the right front wheel, the center stand can be used to support the vehicle in a mode different from when the conventional center stand is used.

A vehicle according to a seventh aspect is the vehicle according to the sixth aspect, in which the center stand includes: a right support post including the right grounding portion at a lower end in the use position; a right support portion that supports the right support post in a manner that makes the right support post turnable relative to the body frame; a left support post including the left grounding portion at a lower end in the use position; a left support portion that supports the left support post in a manner that makes the left support post turnable relative to the body frame; and a link portion that connects the right support post and the left support post, and when the center stand is in the retracted position, the right support post of the center stand is disposed on the right of the right frame portion in the left-right direction of the body frame, and the left support post of the center stand is disposed on the left of the left frame portion in the left-right direction of the body frame in a plan view of the vehicle.

According to the seventh aspect, in the vehicle including the tiltable body frame, the left front wheel, and the right front wheel, the left support post and the right support post more widely separated than the left frame portion and the right frame portion of the body frame support the vehicle. Therefore, the center stand can be used to support the vehicle in a mode different from when the conventional center stand is used. Since the vehicle includes the right front wheel and the left front wheel, an increase in size of the vehicle can be suppressed even if the left support post is disposed on the left of the left frame portion, and the right support post is disposed on the right of the right frame portion, when the center stand is in the retracted position. Therefore, in the vehicle including the tiltable body frame, the left front wheel, and the right front wheel, a center stand different from the conventional center stand can be realized.

A vehicle according to an eighth aspect is the vehicle according to the seventh aspect, in which the link portion of the center stand is formed so that, when the center stand is in the retracted position, an upper end of a connection portion of the right support post and the link portion is positioned above a lower edge of the right frame portion in a side view, while an upper end of the link portion positioned below the right frame portion is positioned below a lower end of the right frame portion, and the upper end of the link portion positioned below the left frame portion is positioned below a lower end of the left frame portion, while an upper end of a connection portion of the left support post and the link portion is positioned above a lower edge of the left frame portion in a side view in the up-down direction of the body frame.

According to the eighth aspect, in the vehicle including the tiltable body frame, the left front wheel, and the right front wheel, the right support post and the left support post of the center stand can be stored up to a level partially overlapping with the left frame portion or the right frame portion in the up-down direction of the body frame, when the center stand is in the retracted position. Therefore, in the vehicle including the tiltable body frame, the left front wheel, and the right front wheel, suppression of the tilt angle of the vehicle in the left-right direction can be reduced, while the left support post and the right support post more widely separated than the left frame portion and the right frame portion of the body frame can support the vehicle. Therefore, a center stand different from the conventional center stand can be realized.

A vehicle according to a ninth aspect is the vehicle according to the first aspect, in which the link mechanism is disposed behind a rotation center of the right front wheel and a rotation center of the left front wheel in the front-rear direction of the body frame.

According to the ninth aspect, since the link mechanism is disposed behind the rotation center of the right front wheel and the rotation center of the left front wheel, the center (upper axis) of the upper cross member of the link mechanism is disposed at a higher position when the center stand is in the use position, compared to when the center stand is in the retracted position. Therefore, in the vehicle including the tiltable body frame, the left front wheel, and the right front wheel, the center stand can be used to support the vehicle in a mode different from when the conventional center stand is used.

A vehicle according to a tenth aspect is the vehicle according to the first aspect, in which the power unit includes an engine, a crankcase, and a transmission case, in which at least part of the power unit is disposed between the lower ends of the right and left front wheels and a lower end of the rear wheel in the front-rear direction of the body frame, and when the center stand is in the use position, the right grounding portion and the left grounding portion of the center stand are disposed forward of a front end of the engine, a front end of the crankcase, and a front end of the transmission case in the front-rear direction of the body frame.

According to the tenth aspect, in the vehicle including the tiltable body frame, the left front wheel, and the right front wheel, the right grounding portion and the left grounding portion of the center stand are disposed forward of the front end of the engine of the power unit, the front end of the crankcase, and the front end of the transmission case in the front-rear direction of the body frame, when the center stand is in the use position. Therefore, in the vehicle including the tiltable body frame, the left front wheel, and the right front wheel, the center stand can be used to support the vehicle in a mode different from when the conventional center stand is used.

### Advantageous Effects of Invention

According to the present invention, a center stand can be used to support a vehicle including an tiltable body frame, a left front wheel, and a right front wheel, in a mode different from when a conventional center stand is used.

### Brief Description of Drawings

FIG. 1 is a perspective view showing a vehicle of an embodiment of the present invention;
FIG. 2 is a plan view showing the vehicle of the embodiment of the present invention;
FIG. 3 is a side view showing the vehicle of the embodiment of the present invention;
FIG. 4 is a front view showing a left front wheel, a right front wheel, a link mechanism, and their surroundings;
FIG. 5 is a plan view showing the left front wheel, the right front wheel, the link mechanism, and their surroundings;
FIG. 6 is a front view showing a state of the link mechanism and the surroundings of the link mechanism when the vehicle tilts;
FIG. 7 is a plan view showing a state of the link mechanism and the surroundings of the link mechanism when a direction of a handlebar is changed;
FIG. 8 is a perspective view describing a fixing structure of a center stand;
FIG. 9 is a plan view describing the fixing structure of the center stand;
FIG. 10 is a diagram describing a disposition relationship between a left grounding portion and a right grounding portion of the center stand, grounding portions of the left front wheel and the right front wheel, and a grounding portion of a rear wheel;
FIG. 11 is a diagram describing a disposition relationship between the left grounding portion and the right grounding portion of the center stand, the grounding portions of the left front wheel and the right front wheel, and the grounding portion of the rear wheel;
FIG. 12 is a diagram describing a variation of the disposition of the grounding portions of the center stand; and
FIG. 13 is a side view describing a fixing structure of the center stand.

### Description of Embodiment

An embodiment of the present invention will be described in detail with reference to the accompanying drawings.

### <Definition of Directions>

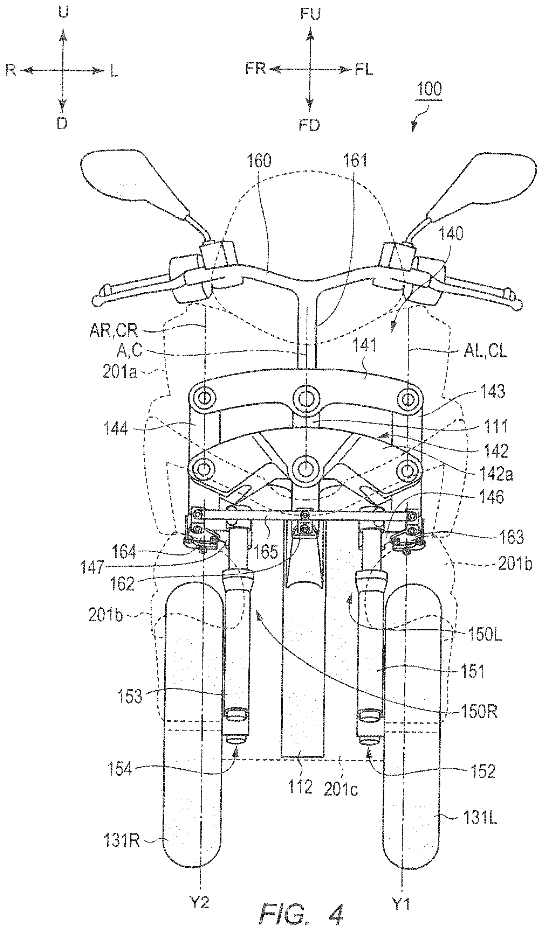

In the accompanying drawings, arrow F denotes a front direction of vehicle 100, and arrow B denotes a rear (or back) direction of vehicle 100. Arrow U denotes an upward direction of vehicle 100, and arrow D denotes a downward direction of vehicle 100. Arrow R denotes a right direction of vehicle 100, and arrow L denotes a left direction of vehicle 100. Body frame 110 tilts in a left-right direction of vehicle 100 relative to a vertical line to turn vehicle 100. Therefore, in addition to the directions of vehicle 100, directions based on body frame 110 are defined. Arrow FF in the accompanying drawings denotes a front direction based on body frame 110, and arrow FB denotes a rear direction based on body frame 110. Arrow FU denotes an upward direction based on body frame 110, and arrow FD denotes a downward direction based on body frame 110. Arrow FR denotes a right direction based on body frame 110, and arrow FL denotes a left direction based on body frame 110. In the description, a front-rear direction of vehicle 100, an up-down direction of vehicle 100, and the left-right direction of vehicle 100 denote front-rear, up-down, and left-right directions as viewed from a rider driving vehicle 100 and are directions based on vehicle 100. In this description, a front-rear direction of body frame 110, an up-down direction of body frame 110, and a left-right direction of body frame 110 are front-rear, up-down, and left-right directions as viewed from the rider driving vehicle 100 and are directions based on body frame 110. A center in a vehicle width direction denotes a center of the vehicle width in the left-right direction of vehicle 100. In other words, the center in the vehicle width direction denotes a center in the left-right direction of vehicle 100. In this description, an upright state denotes a state in which the up-down direction of body frame 110 coincides with the vertical line, and handlebar 160 is not steered. The state in which handlebar 160 is not steered denotes a state in which rotation axes of left front wheel 131L and right front wheel 131R are orthogonal to the front-rear direction of body frame 110 in a plan view. In other words, the state in which handlebar 160 is not steered is a state in which steering shaft 161 is not turned or a state in which handlebar 160 is not turned as shown in FIG. 4. In the upright state, the direction of vehicle 100 coincides with the direction of body frame 110. When body frame 110 tilts in the left-right direction relative to the vertical direction to turn vehicle 100, the left-right direction of vehicle 100 does not coincide with the left-right direction of body frame 110. The up-down direction of vehicle 100 does not coincide with the up-down direction of body frame 110, either. However, the front-rear direction of vehicle 100 coincides with the front-rear direction of body frame 110.

In the present description, an axis extending in the front-rear direction denotes not only an axis parallel to the front-rear direction of body frame 110, but also includes an axis tilted in a range of ±45° relative to the front-rear direction of body frame 110. An axis extending in a direction closer to the front-rear direction than to the left-right direction and the up-down direction is included in the axis extending in the front-rear direction. Similarly, an axis extending in the up-down direction includes an axis tilted in a range of ±45° relative to the up-down direction of body frame 110. An axis extending in a direction closer to the up-down direction than to the front-rear direction and the left-right direction is included in the axis extending in the up-down direction. An axis extending in the left-right direction includes an axis tilted in a range of ±45° relative to the left-right direction of body frame 110. An axis extending in a direction closer to the left-right direction than to the front-rear direction and the up-down direction is included in the axis extending in the left-right direction.

In the present description, when the expression "extends in the front-rear direction" is used for a part of body frame 110, the expression holds true as long as the extending direction includes a component of body frame 110 in the front-rear direction, and the expression thus includes a mode in which the part extends in an oblique front-rear direction tilted up, down, left, or right.

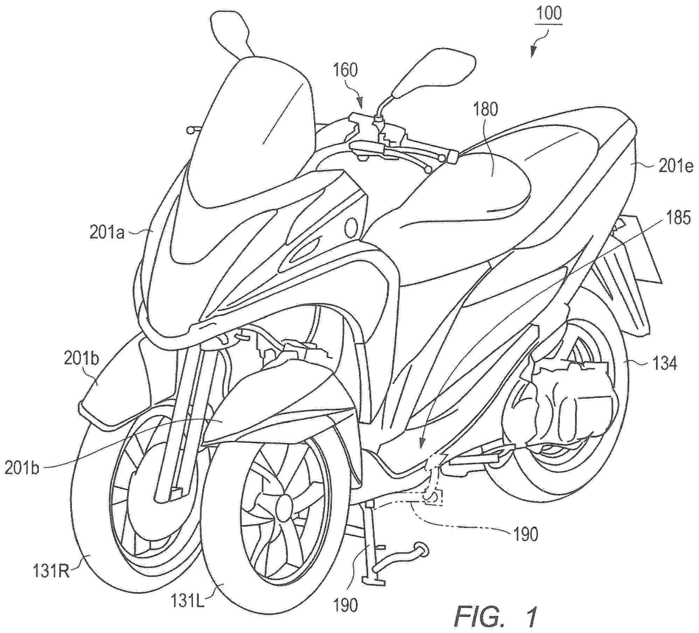

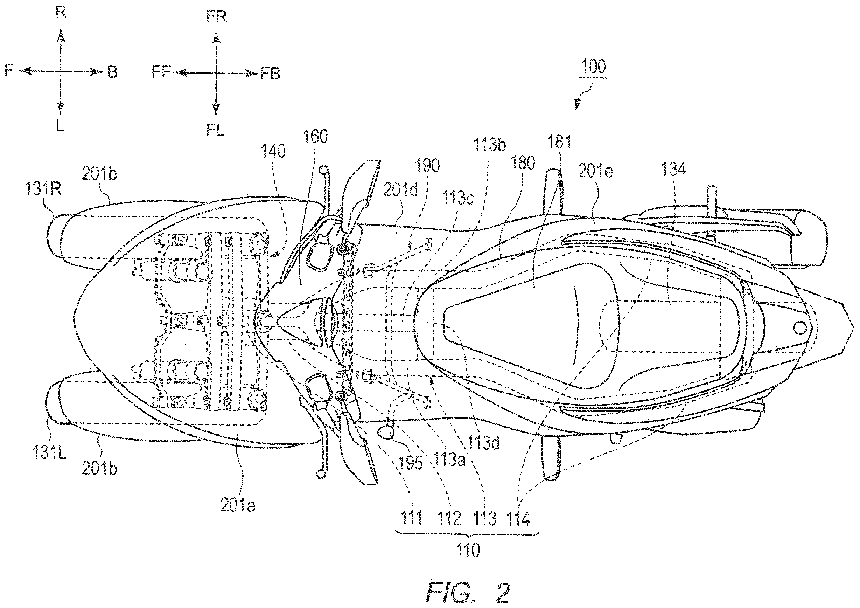

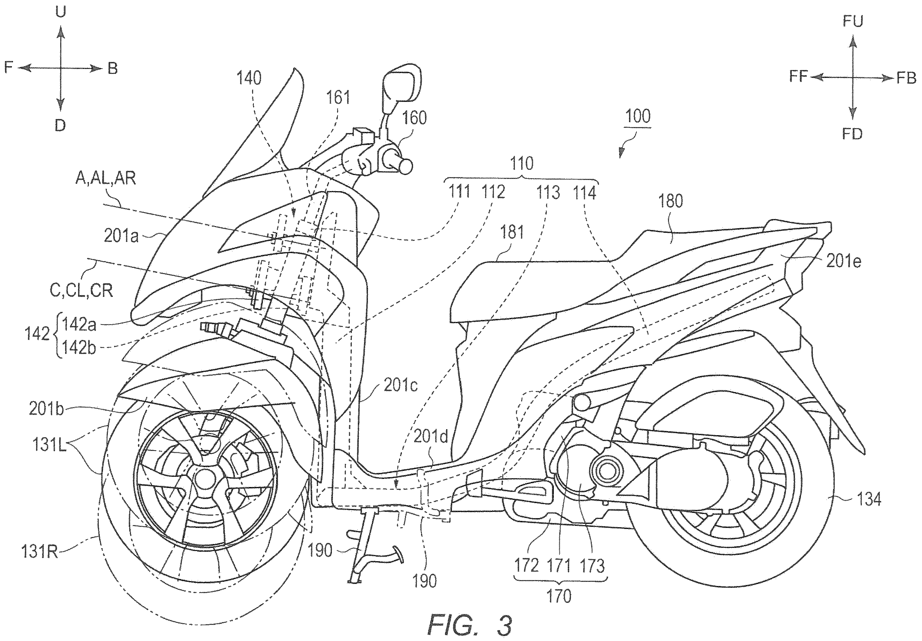

FIG. 1 is a perspective view showing a vehicle of an embodiment of the present invention. FIG. 2 is a plan view showing the vehicle of the embodiment. FIG. 3 is a side view showing the vehicle of the embodiment. In FIG. 3, alternate long and two short dashes lines indicate left front wheel 131L and right front wheel 131R when vehicle 100 tilts in the left-right direction.

As shown in FIG. 1, vehicle 100 of the embodiment includes left front wheel 131L, right front wheel 131R, one rear wheel 134, handlebar 160, seat 180, center stand 190, and body covers (201a, 201b, 201c, 201d, and 201e). As shown in FIGS. 2 and 3, vehicle 100 includes body frame 110, link mechanism 140, and power unit 170 (see FIG. 3).

Body frame 110 holds the components of vehicle 100. Body frame 110 includes link support 111, down frame 112, underframe 113, and rear frames 114. In FIGS. 2 and 3, broken lines indicate body frame 110 hidden under body covers (201a, 201b, 201c, 201d, and 201e).

Link support 111 is disposed on a front part of vehicle 100. Link support 111 supports link mechanism 140. Although not particularly limited, link support 111 also serves as a head tube in this embodiment. Link support 111 as a head tube is tilted relative to the vertical direction so that the upper part is positioned behind the lower part in a side view of the vehicle. Link support 111 as a head tube supports handlebar 160 and steering shaft 161. Steering shaft 161 is inserted to link support 111 as a head tube so as to be turnable. Steering shaft 161 is turnable around a center axis of vehicle 100 extending in the up-down direction.

Down frame 112 extends downward from link support 111 and is connected to underframe 113.

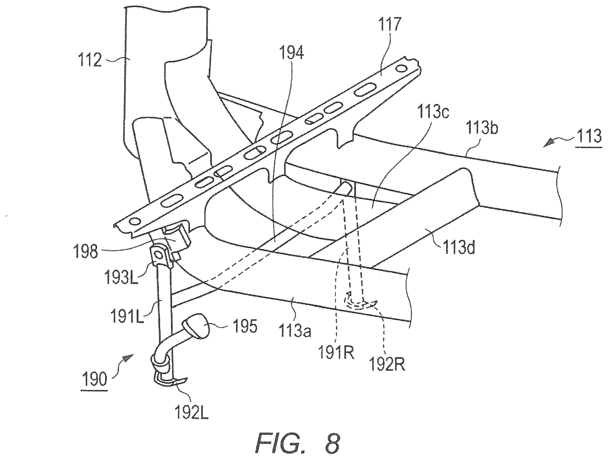

Underframe 113 includes left underframe 113a as a left frame portion, right underframe 113b as a right frame portion, intermediate underframe 113c, and side underframe 113d (see also FIG. 8).

One end of left underframe 113a and one end of right underframe 113b are connected to a lower part of down frame 112. The other end of left underframe 113a is connected to left rear frame 114. The other end of right underframe 113b is connected to right rear frame 114. Left underframe 113a and right underframe 113b extend in the front-rear direction of body frame 110. Left underframe 113a and right underframe 113b are disposed side by side in the left-right direction of body frame 110. Left underframe 113a and right underframe 113b are disposed below a floor surface of floor portion 201d to support floor portion 201d.

Side underframe 113d is placed between left underframe 113a and right underframe 113b. One end of intermediate underframe 113c is connected to the lower part of down frame 112, and the other end is connected to side underframe 113d. Intermediate underframe 113c extends in the front-rear direction of body frame 110 between left underframe 113a and right underframe 113b.

Underframe 113 may be configured not to include either one or both of intermediate underframe 113c and side underframe 113d.

Rear frames 114 are disposed on the left and right of vehicle 100. Left rear frame 114 extends toward the rear part of vehicle 100 from the rear end of left underframe 113a. Right rear frame 114 extends toward the rear part of vehicle 100 from the rear end of right underframe 113b. Rear frames 114 support seat 180 and power unit 170. Power unit 170 may be supported by rear frames 114 through a swing arm so as to be swingable.

Power unit 170 generates driving force of rear wheel 134. As shown in FIG. 3, power unit 170 includes: engine 171; crankcase 172, which houses a crankshaft; and transmission case 173, which houses a transmission. Engine 171, crankcase 172, and transmission case 173 are disposed behind left front wheel 131L and right front wheel 131R in the front-rear direction of body frame 110. At least part of engine 171, crankcase 172, and transmission case 173 is disposed forward of a grounding portion of rear wheel 134 in the front-rear direction of body frame 110. Power unit 170 is disposed below seat 180.

Power unit 170 may be configured not to include the engine and the crankcase but to include a drive source, such as an electric motor, and a transmission.

The body cover includes front cover 201a, a pair of left and right front fenders 201b, leg shield 201c, floor portion 201d, and rear cover 201e.

Front cover 201a covers at least part of the front of link mechanism 140.

Leg shield 201c is positioned behind link mechanism 140 and behind at least part of left front wheel 131L and right front wheel 131R. Leg shield 201c is connected to floor portion 201d.

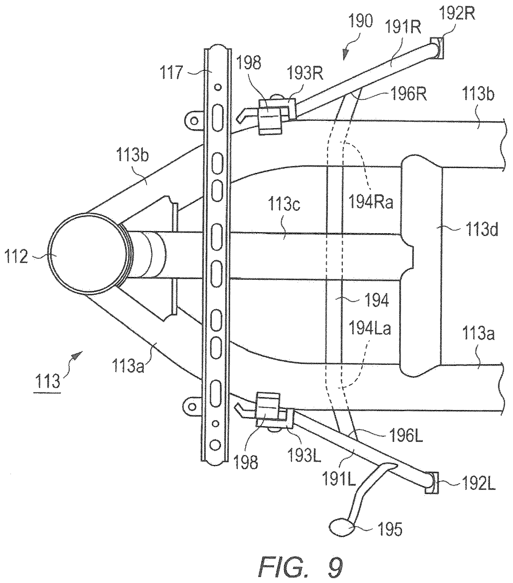

Floor portion 201d includes a floor surface for the rider seated on seat 180 to put his/her feet on. The floor surface is disposed forward of seat 180 and behind leg shield 201c in a plan view and is disposed at a position lower than upper ends of left front wheel 131L and right front wheel 131R in a side view. Although not particularly limited, the width of floor portion 201d is substantially the same as the length from the left end of left front wheel 131L to the right end of right front wheel 131R. Floor portion 201d is supported by left underframe 113a, right underframe 113b, intermediate underframe 113c, and beam material 117 installed above them (see FIGS. 8 and 9).

Rear cover 201e covers the surroundings of rear frames 114.

Seat 180 includes seating surface 181 on which the rider sits. The front end of seating surface 181 is disposed behind the rear ends of left front wheel 131L and right front wheel 131R in the front-rear direction of body frame 110. At least part of seating surface 181 is disposed forward of the front end of rear wheel 134.

Left front wheel 131L and right front wheel 131R are disposed side by side in the left-right direction of body frame 110. Left front wheel 131L and right front wheel 131R tilt in the left-right direction along with body frame 110.

Rear wheel 134 is supported by a swing arm that can swing relative to body frame 110. The swing arm may be supported by body frame 110. When power unit 170 is fixed to body frame 110, the swing arm may be supported by power unit 170. The swing arm is connected to rear frames 114 via a suspension. When suspension extends, the swing arm swings relative to rear frames 114, accordingly. Rear wheel 134 tilts in the left-right direction along with body frame 110.

### <Link Mechanism>

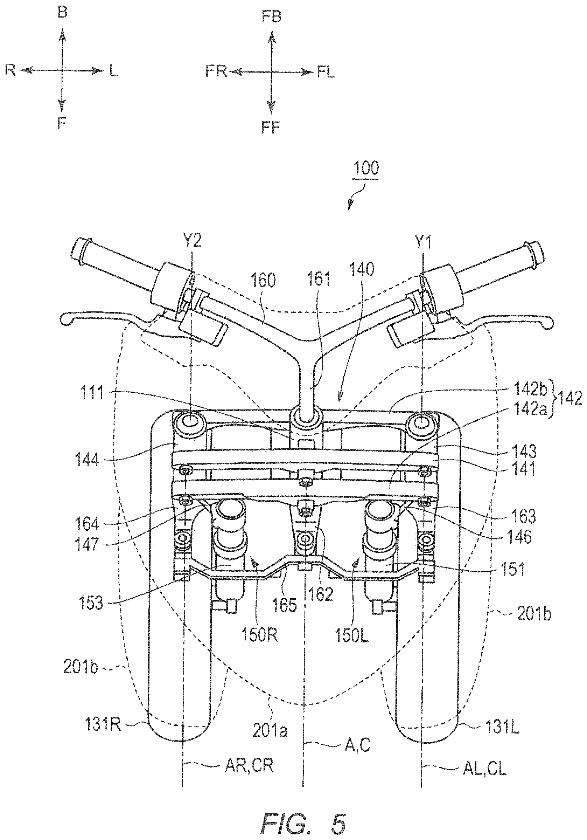

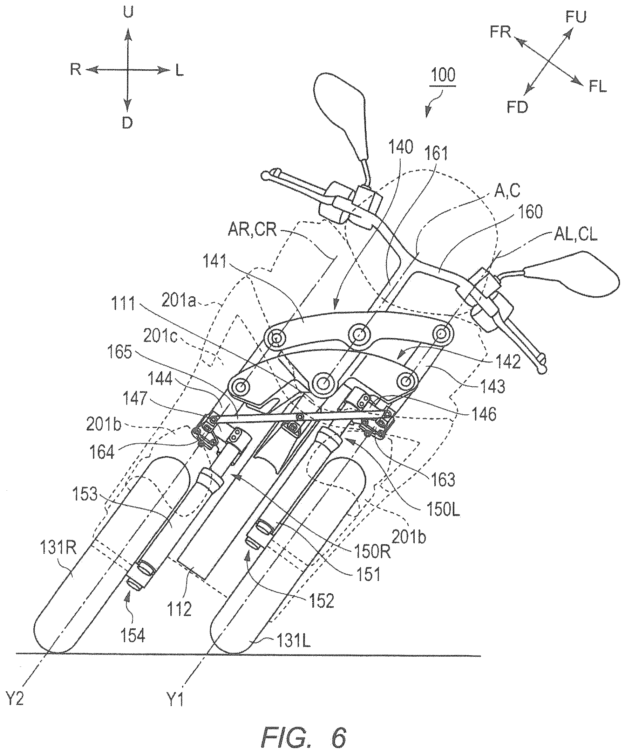

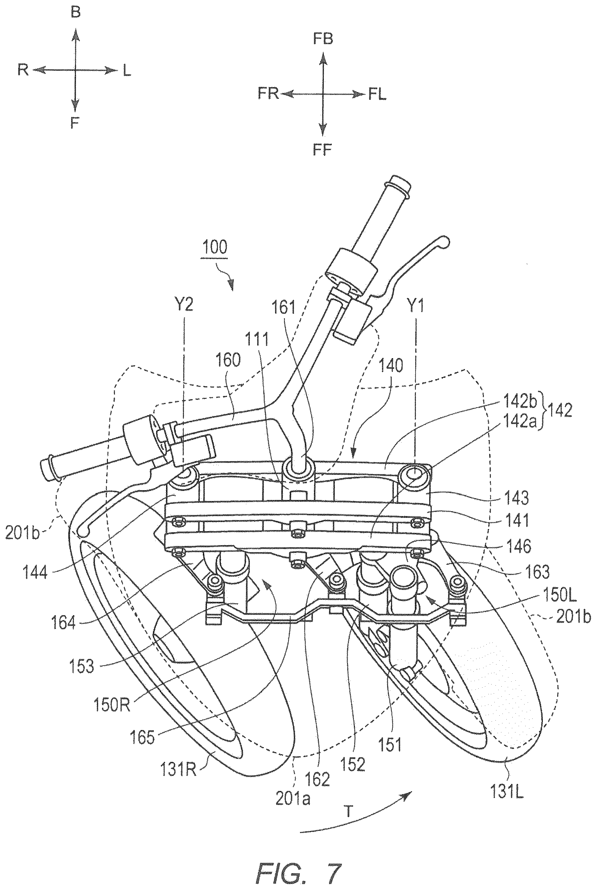

FIG. 4 is a front view showing the left front wheel, the right front wheel, the link mechanism, and their surroundings. FIG. 5 is a plan view showing the left front wheel, the right front wheel, the link mechanism, and their surroundings. FIG. 6 is a front view showing a state of the link mechanism and the surroundings of the link mechanism when the vehicle tilts. FIG. 7 is a plan view showing a state of the link mechanism and the surroundings of the link mechanism when the direction of the handlebar is changed.

The link mechanism 140 has a configuration of parallel four-bar linkage (also called parallelogram link).

Link mechanism 140 is supported by link support 111 of body frame 110. Link mechanism 140 includes upper cross member 141, lower cross member 142, left-side rod 143, and right-side rod 144 as components for performing a tilting action of vehicle 100.

As shown in FIG. 4, upper cross member 141 and lower cross member 142 of link mechanism 140 are disposed below handlebar 160 and above the upper ends of left front wheel 131L and right front wheel 131R, with body frame 110 in the upright state. As shown in FIG. 5, upper cross member 141 and lower cross member 142 of link mechanism 140 are disposed at positions overlapping with left front wheel 131L and right front wheel 131R in the front-rear direction of body frame 110. Upper cross member 141 and lower cross member 142 of link mechanism 140 are disposed behind rotation centers of left front wheel 131L and right front wheel 131R in the front-rear direction of body frame 110.

An intermediate portion of upper cross member 141 is supported by link support 111. Upper cross member 141 is supported so as to be turnable around upper axis A (see FIG. 3) extending in the front-rear direction of body frame 110. Specifically, upper axis A is parallel to plane FF-FU and is tilted 45 degrees or less in the direction of arrow FU from arrow FF.

A left end portion of upper cross member 141 is supported by left-side rod 143. Upper cross member 141 is turnable relative to left-side rod 143, around upper left axis AL parallel to upper axis A. A right end portion of upper cross member 141 is supported by right-side rod 144. Upper cross member 141 is turnable relative to right-side rod 144, around upper right axis AR parallel to upper axis A.

An intermediate portion of lower cross member 142 is supported by link support 111. Lower cross member 142 is supported so as to be turnable around lower axis C (see FIG. 3) parallel to upper axis A. Lower cross member 142 is disposed below upper cross member 141. Lower cross member 142 has substantially the same length as upper cross member 141 in the vehicle width direction and is disposed parallel to upper cross member 141.

A left end of lower cross member 142 is supported by left-side rod 143. Lower cross member 142 is turnable relative to left-side rod 143, around lower left axis CL parallel to lower axis C. A right end portion of lower cross member 142 is supported by right-side rod 144. Lower cross member 142 is turnable relative to right-side rod 144, around lower right axis CR parallel to lower axis C.

Although not particularly limited, lower cross member 142 of link mechanism 140 includes: front lower cross member 142a including a part positioned forward of link support 111, left-side rod 143, and right-side rod 144; and rear lower cross member 142b including a part positioned behind link support 111, left-side rod 143, and right-side rod 144 (see FIGS. 3 and 5) in the embodiment.

Left-side rod 143 is disposed on the left of link support 111 and extends parallel to the direction of the extension of link support 111. Left-side rod 143 is disposed above left front wheel 131L. Left-side rod 143 supports left shock absorber 150L described later in a manner that makes left shock absorber 150L rotatable around left axis Y1. Left shock absorber 150L is equivalent to an example of a left front wheel support unit of the present invention.

Right-side rod 144 is disposed on the right of link support 111 and extends parallel to the direction of the extension of link support 111. Right-side rod 144 is disposed above right front wheel 131R. Right-side rod 144 supports right shock absorber 150R described later in a manner that makes right shock absorber 150R rotatable around right axis Y2. Right shock absorber 150R is equivalent to an example of a right front wheel support unit of the present invention.

In this way, upper cross member 141, lower cross member 142, left-side rod 143, and right-side rod 144 are supported so that upper cross member 141 and lower cross member 142 maintain positions parallel to each other, and left-side rod 143 and right-side rod 144 maintain positions parallel to each other.

As shown in FIG. 6, link mechanism 140 tilts left front wheel 131L and right front wheel 131R when vehicle 100 tilts in the left-right direction (R-L direction). Link mechanism 140 relatively changes the levels of left front wheel 131L and right front wheel 131R in the up-down direction of body frame 110 (direction of arrows FU and FD) in response to body frame 110 that is tilting in the left-right direction.

### <Steering Mechanism>

A steering mechanism is disposed between handlebar 160 and left and right front wheels 131L and 131R. The steering mechanism includes steering shaft 161, center steering arm 162, tie rod 165, left steering arm 163, right steering arm 164, left shock absorber 150L, and right shock absorber 150R.

Left shock absorber 150L includes left dumper 151, left bracket 146, and left turn prevention mechanism 152. Left shock absorber 150L is supported by left-side rod 143 and tilts along with left-side rod 143.

Left damper 151 attenuates vibration from a road by, for example, a telescopic structure. An upper end of left damper 151 is fixed to left bracket 146. A lower end of the left damper supports left front wheel 131L. In this way, left damper 151 absorbs displacement of left front wheel 131L relative to an upper part of left damper 151 in the up-down direction of body frame 110. The expansion and contraction direction of left damper 151 may be tilted from the up-down direction of body frame 110. In this case, left front wheel 131L is also displaced relative to the upper part of left damper 151 in the front-rear direction or the left-right direction of body frame 110. In this case, left damper 151 also absorbs the displacement of left front wheel 131L in the front-rear direction or the left-right direction.

Left turn prevention mechanism 152 is disposed parallel to left damper 151. Left turn prevention mechanism 152 has a telescopic structure. An upper end of left turn prevention mechanism 152 is fixed to left bracket 146. A lower end of left turn prevention mechanism 152 supports left front wheel 131L.

Left damper 151 and left turn prevention mechanism 152 support left front wheel 131L to associate left bracket 146 with left front wheel 131L to prevent a relative change in the direction of left bracket 146 and the direction of left front wheel 131L.

Right shock absorber 150R includes right damper 153, right bracket 147, and right turn prevention mechanism 154. Right shock absorber 150R is supported by right-side rod 144 and tilts along with right-side rod 144.

Right damper 153 attenuates vibration from a road by, for example, a telescopic structure. An upper end of right damper 153 is fixed to right bracket 147. A lower end of right damper 153 supports right front wheel 131R. In this way, right damper 153 absorbs displacement of right front wheel 131R relative to an upper part of right damper 153 in the up-down direction of body frame 110. The expansion and contraction direction of right damper 153 may be tilted from the up-down direction of body frame 110. In this case, right front wheel 131R is also displaced relative to the upper part of right damper 153 in the front-rear direction or the left-right direction of body frame 110. In this case, right damper 153 also absorbs the displacement in the front-rear direction or the left-right direction of right front wheel 131R.

Right turn prevention mechanism 154 is disposed parallel to right damper 153. Right turn prevention mechanism 154 has a telescopic structure. An upper end of right turn prevention mechanism 154 is fixed to right bracket 147. A lower end of right turn prevention mechanism 154 supports right front wheel 131R.

Right damper 153 and right turn prevention mechanism 154 support right front wheel 131R to associate right bracket 147 with right front wheel 131R to prevent a relative change in the direction of right bracket 147 and the direction of right front wheel 131R.

Center steering arm 162 and tie rod 165 are disposed above left front wheel 131L and right front wheel 131R. One end portion of center steering arm 162 is fixed to steering shaft 161, and center steering arm 162 turns along with steering shaft 161. The other end portion of center steering arm 162 is supported by tie rod 165. Center steering arm 162 transmits the turning of steering shaft 161 to tie rod 165.

Left steering arm 163 is fixed to left bracket 146.

Right steering arm 164 is fixed to right bracket 147.

Tie rod 165 supports center steering arm 162, left steering arm 163, and right steering arm 164 and transmits the turning of center steering arm 162 to left steering arm 163 and right steering arm 164.

According to the configurations, when handlebar 160 is operated to turn steering shaft 161 and center steering arm 162, left bracket 146 and right bracket 147 turn at the same angle as shown in FIG. 7. As a result, left front wheel 131L and right front wheel 131R are steered in same direction T. The turning center of the steering of left front wheel 131L is set to overlap the grounding portion of left front wheel 131L, and the turning center of the steering of right front wheel 131R is set to overlap the grounding portion of right front wheel 131R.

### <Center Stand>

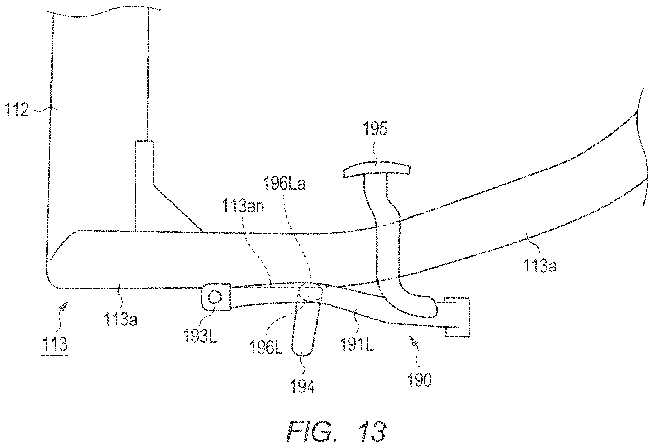

FIG. 8 is a perspective view describing a fixing structure of the center stand. FIG. 9 is a plan view describing a fixing structure of the center stand. FIG. 13 is a side view describing a fixing structure of the center stand.

Center stand 190 includes left support post 191L, left grounding portion 192L, left support portion 193L, right support post 191R, right grounding portion 192R, right support portion 193R, link portion 194, and pedal 195. Center stand 190 is supported so as to be turnable relative to body frame 110.

Left grounding portion 192L is formed on one end of left support post 191L. Left support portion 193L is formed on the other end of left support post 191L.

Right grounding portion 192R is formed on one end of right support post 191R. Right support portion 193R is formed on the other end of right support post 191R.

Link portion 194 is placed between left support post 191L and right support post 191R and integrally turns left support post 191L and right support post 191R.

As shown in FIGS. 9 and 13, in link portion 194, upper end 194La of link portion 194 positioned below left underframe 113a is positioned below lower end 113an of left underframe 113a in the up-down direction of body frame 110 when center stand 190 is in a retracted position, and upper end 196La of connection portion 196L of left support post 191L and link portion 194 is positioned above lower end 113an of left underframe 113a in a side view. Similarly, in link portion 194, the upper end of connection portion 196R of right support post 191R and link portion 194 is positioned above the lower edge of right underframe 113b in the up-down direction of body frame 110 in a side view when center stand 190 is in the retracted position, and upper end 194Ra of link portion 194 positioned below right underframe 113b is positioned below the lower end of right underframe 113b.

Pedal 195 extends to the left from left support post 191L while fixed to left support post 191L.

Center stand 190 is supported by body frame 110 so as to be turnable. This turning allows for switching of center stand 190 between a use position (indicated by a solid line in FIG. 1) and the retracted position (indicated by an alternate long and two short dashes line in FIG. 1).

Specifically, left support portion 193L is supported by left underframe 113a via bracket 198 so as to be turnable. Right support portion 193R is supported by right underframe 113b via bracket 198 so as to be turnable. Bracket 198 includes a stopper that comes into contact with either one or both of left support post 191L and right support post 191R when center stand 190 is turned from the retracted position to the use position. The stopper prevents left support post 191L and right support post 191R from turning beyond the use position.

FIG. 8 shows the use position of center stand 190. The use position refers to a position in which left support post 191L stands up until left grounding portion 192L is positioned forward of left support portion 193L in the front-rear direction of body frame 110, right support post 191R stands up until right grounding portion 192R is positioned forward of right support portion 193R, and left support post 191L or right support post 191R comes in contact with the stopper of bracket 198 and stands still. In the use position, at least left and right grounding portions 192L and 192R of center stand 190 and rear wheel 134 are grounded. Although not particularly limited, when center stand 190 is switched to the use position, left shock absorber 150L and right shock absorber 150R are extended, so that left front wheel 131L and right front wheel 131R are also grounded in this embodiment.

FIGS. 9 and 13 show the retracted position of center stand 190. The retracted position refers to a position in which left grounding portion 192L and right grounding portion 192R are separated from the ground, left grounding portion 192L is positioned behind left support portion 193L in the front-rear direction of body frame 110, right grounding portion 192R is positioned behind right support portion 193R, and center stand 190 is partially in contact with vehicle 100 and still.

Left support post 191L is disposed on the left of left underframe 113a in a plan view in both of the retracted position and the use position.

Right support post 191R is disposed on the right of right underframe 113b in a plan view in both of the retracted position and the use position.

In the retracted position, only pedal 195 of center stand 190 is disposed outside of floor portion 201d in the left-right direction of body frame 110.

Link portion 194 curves to avoid left underframe 113a and right underframe 113b when center stand 190 is in the retracted position. Specifically, when center stand 190 is in the retracted position, the upper end of the connection portion of right support post 191R and link portion 194 is disposed above the lower edge of right underframe 113b in the up-down direction of body frame 110 in a side view. When center stand 190 is in the retracted position, the upper end of link portion 194 is disposed below the lower end of right underframe 113b in a range where link portion 194 and right underframe 113b overlap in a plan view. When center stand 190 is in the retracted position, the upper end of link portion 194 is disposed below the lower end of left underframe 113a in a range where link portion 194 and left underframe 113a overlap in a plan view. When center stand 190 is in the retracted position, the upper end of the connection portion of left support post 191L and link portion 194 is disposed above the lower edge of left underframe 113a in a side view.

Switching of center stand 190 from the retracted position to the use position requires an operation to slightly raise the front part of vehicle 100 using left grounding portion 192L and right grounding portion 192R of center stand 190 as fulcrums. In vehicle 100 of the present embodiment, link mechanism 140, which is heavy, is disposed behind the rotation centers of left front wheel 131L and right front wheel 131R in the front-rear direction of body frame 110. Therefore, compared to when link mechanism 140 is disposed forward of the rotation centers of left front wheel 131L and right front wheel 131R, the operation to raise the front part of vehicle 100 becomes easier when center stand 190 is set.

### <Disposition of Left Grounding Portion and Right Grounding Portion of Center Stand>

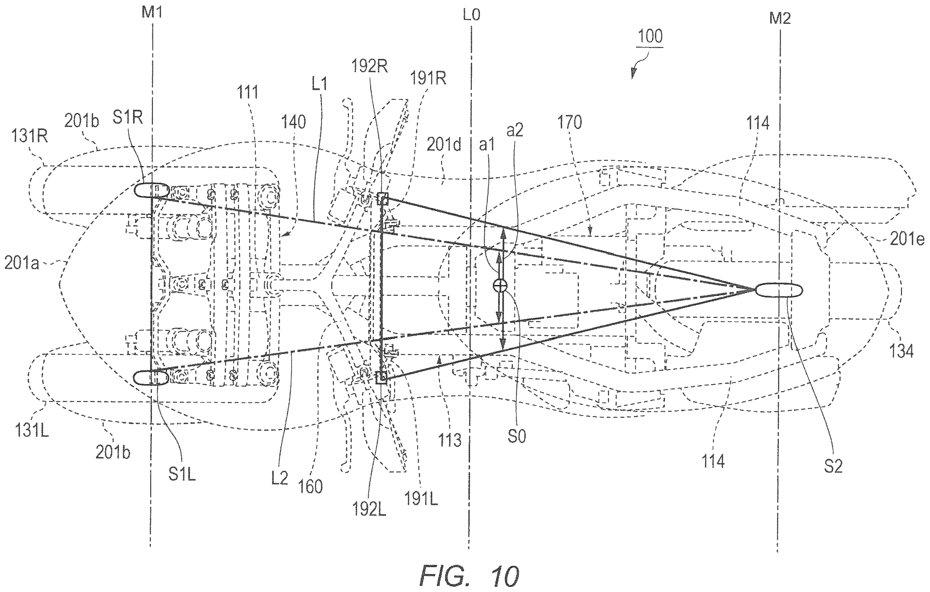

FIGS. 10 to 12 are diagrams describing a disposition relationship between the left grounding portion and the right grounding portion of the center stand, the grounding portions of the left front wheel and the right front wheel, and the grounding portion of the rear wheel. In FIGS. 10 to 12, broken lines indicate plan views of the configurations of vehicle 100.

Hereinafter, a description will be given of a state in which right front wheel 131R and left front wheel 131L are directed in parallel to the front-rear direction of body frame 110 in a plan view, and center stand 190 is in the use position. The state in which right front wheel 131R and left front wheel 131L are directed in parallel to the front-rear direction of body frame 110 in a plan view denotes a state in which handlebar 160 is not steered. Left grounding portion 192L and right grounding portion 192R shown in FIGS. 10 to 12 represent a disposition when center stand 190 is in the use position.

Left grounding portion 192L and right grounding portion 192R are disposed forward of the center (center line LO) of left and right front wheel grounding portions S1L and SIR, and rear wheel grounding portion S2 in the front-rear direction of body frame 110. In FIG. 10, line segment M1 is a line segment passing through the centers of left front wheel grounding portion S1L and right front wheel grounding portion S1R. Line segment M1 is a line segment passing through the center of left front wheel 131L in the front-rear direction and the center of right front wheel 131R in the front-rear direction. Line segment M2 indicates a line segment passing through the center of rear wheel grounding portion S2 and extending in the left-right direction of body frame 110. Center line L0 indicates the center of line segment M1 and line segment M2. Here, left front wheel grounding portion S1L, right front wheel grounding portion S1R, and rear wheel grounding portion S2 are grounded parts in the use state of center stand 190.

As shown in FIG. 10, right grounding portion 192R is disposed on the right of right virtual straight line L1 (equivalent to right grounding virtual straight line) in the left-right direction of body frame 110. Left grounding portion 192L is disposed on the left of left virtual straight line L2 (equivalent to left grounding virtual straight line) in the left-right direction of body frame 110.

In FIG. 10, thick alternate long and short dash lines indicate a triangle including right virtual straight line L1 and left virtual straight line L2 as two sides of the triangle. Right virtual straight line L1 is a straight line connecting the left end of grounding portion S1R of right front wheel 131R and the front end of rear wheel grounding portion S2. Left virtual straight line L2 is a straight line connecting the right end of grounding portion S1L of left front wheel 131L and the front end of rear wheel grounding portion S2.

FIG. 10 illustrates a comparison between a case in which left front wheel 131L, right front wheel 131R, and one rear wheel 134 support vehicle 100 and a case in which center stand 190 and one rear wheel 134 support vehicle 100. The case in which left front wheel 131L, right front wheel 131R, and one rear wheel 134 support vehicle 100 denotes a case in which movement of link mechanism 140 is prevented, and vehicle 100 is supported by fixing left front wheel 131L and right front wheel 131R to prevent inclination in the left-right direction.

When left front wheel 131L, right front wheel 131R, and one rear wheel 134 support vehicle 100, vehicle 100 is supported by three vertices of the triangle indicated by the thick alternate long and short dash lines of FIG. 10. In this case, it can be assumed that vehicle 100 is supported by two endpoints of arrow a1 in the left-right direction based on center of gravity S0. Arrow a1 is a line segment extending in the left-right direction from center of gravity S0 of vehicle 100 in a plan view, the line segment including intersections with right virtual straight line L1 and left virtual straight line L2 as endpoints. Center of gravity S0 indicates the center of gravity of vehicle 100 when no rider is on the vehicle.

On the other hand, when vehicle 100 is supported by center stand 190, vehicle 100 is supported by three points, left grounding portion 192L and right grounding portion 192R of center stand 190 and rear wheel grounding portion S2. In FIG. 10, thick solid lines indicate a triangle with these three points as vertices. In this case, it can be assumed that vehicle 100 is supported by two endpoints of arrow a2 in the left-right direction based on center of gravity S0. Arrow a2 is a line segment extending in the left-right direction from center of gravity S0 in a plan view, the line segment including intersections of the thick solid lines as endpoints.

In this way, the distance between two endpoints that can assume that vehicle 100 is supported when center stand 190 is used is longer than the distance between two endpoints that can assume that vehicle 100 is supported when left front wheel 131L, right front wheel 131R, and one rear wheel 134 support vehicle 100, in the left-right direction based on center of gravity S0.

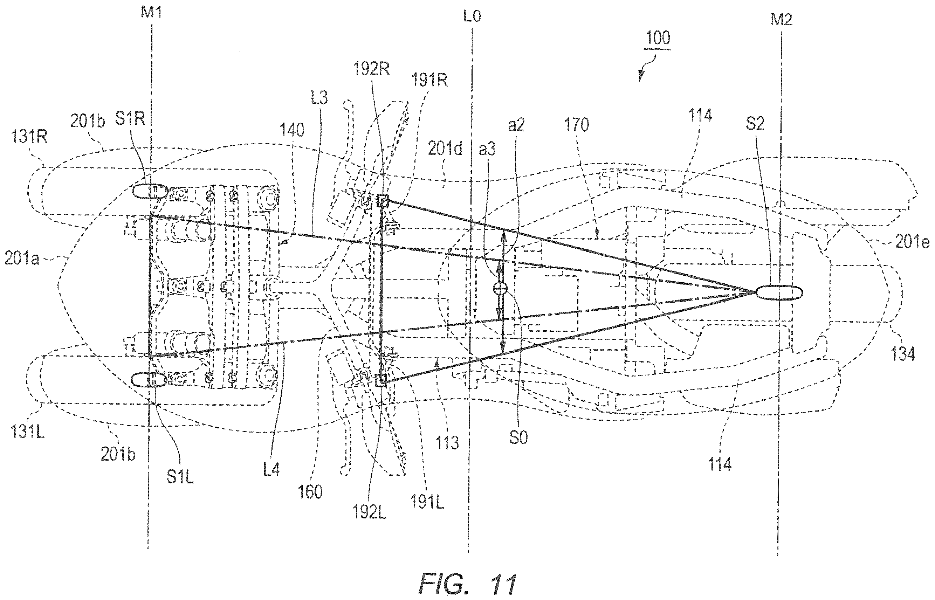

As shown in FIG. 11, right grounding portion 192R is disposed on the right of right virtual straight line L3 (equivalent to right end portion virtual straight line) in the left-right direction of body frame 110. Left grounding portion 192L is disposed on the left of left virtual straight line L4 (equivalent to left end portion virtual straight line) in the left-right direction of body frame 110.

In FIG. 11, thick alternate long and short dash lines indicate a triangle including right virtual straight line L3 and left virtual straight line L4 as two sides of the triangle. Right virtual straight line L4 is a straight line connecting the right end of the center of left front wheel 131L in the front-rear direction and the front end of rear wheel grounding portion S2 in a plan view of body frame 110. Left virtual straight line L3 is a straight line connecting the left end of the center of right front wheel 131R in the front-rear direction and the front end of rear wheel grounding portion S2 in a plan view of body frame 110.

The support by left front wheel 131L and right front wheel 131R is more flexible than the support by center stand 190, considering the deformation of left front wheel 131L and right front wheel 131R and the expansion and contraction of left shock absorber 150L and right shock absorber 150R. Taking such flexibility into consideration, when left front wheel 131L, right front wheel 131R, and rear wheel 134 support vehicle 100, it can be assumed that vehicle 100 is supported by three vertices of the triangle drawn by the thick alternate long and short dash lines, two sides of the triangle being right virtual straight line L3 and left virtual straight line L4. In this case, it can be assumed that vehicle 100 is supported by two endpoints of arrow a3 in the left-right direction based on center of gravity S0. Arrow a3 is a line segment extending in the left-right direction from center of gravity S0 in a plan view, the line segment including intersections with right virtual straight line L3 and left virtual straight line L4 as endpoints.

As shown in FIG. 11, the distance between two points of arrow a2 that can be assumed to be supporting vehicle 100 when center stand 190 is used is longer than the distance between two endpoints of arrow a3 that can be assumed to be supporting vehicle 100 when left front wheel 131L, right front wheel 131R, and one rear wheel 134 support vehicle 100, in the left-right direction based on center of gravity S0.

### <Variation of Disposition of Left Grounding Portion and Right Grounding Portion of Center Stand>

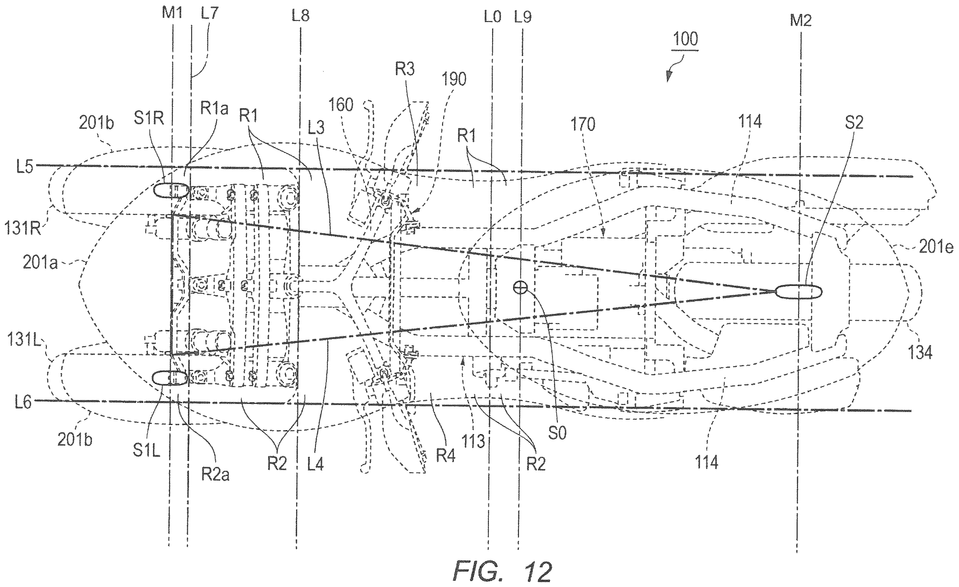

FIG. 12 is a diagram describing a variation of the disposition of the left grounding portion and the right grounding portion of the center stand.
131R. Therefore, the vehicle width in the front of vehicle 100 can be easily increased than the center of vehicle 100. As described, the width of floor portion 201d of vehicle 100 in the left-right direction is substantially the same as the width from the right end of of center stand 190 are hidden under the bottom of vehicle 100 and cannot be seen from above body frame 110 when center stand 190 is in the retracted position.

Taking the width of floor portion 201d into consideration, right grounding portion 192R of center stand 190 is disposed on the left of right virtual straight line L5 as shown in FIG. 12. Left grounding portion 192L is disposed on the right of left virtual straight line L6. Right virtual straight line L5 is a straight line passing through the right end of right front wheel 131R and extending in the front-rear direction of body frame 110. Left virtual straight line L6 is a straight line passing through the left end of left front wheel 131L and extending in the front-rear direction of body frame 110.

Center stand 190 and rear wheel 134 support vehicle 100 at the use of center stand 190. Therefore, left grounding portion 192L and right grounding portion 192R of center stand 190 can be disposed forward of center of gravity S0 of vehicle 100 (forward of virtual straight line L9). Virtual straight line L9 is a straight line passing through center of gravity S0 and extending in the left-right direction of body frame 110. Furthermore, left grounding portion 192L and right grounding portion 192R of center stand 190 can be 192R of center stand 190 forward of the rotation centers of left front wheel 131L and right front wheel 131R in the front-rear direction of body frame 110. Therefore, left grounding portion 192L and right grounding portion 192R of center stand 190 can be disposed behind line segment M1. Line segment M1 overlaps the rotation centers of left front wheel 131L and right front wheel 131R in a plan view with the body frame 110 in the upright state.

It is difficult to dispose left grounding portion 192L and right grounding portion 192R of center stand 190 forward of left front wheel grounding portion S1L and right front wheel grounding portion S1R in the front-rear direction of body frame 110. Therefore, left grounding portion 192L and right grounding portion 192R of center stand 190 can be disposed behind virtual straight line L7. Virtual straight line L7 is a line segment passing through the rear end of left front wheel grounding portion S1L and the rear end of right front wheel grounding portion S1R.

Furthermore, right grounding portion 192R of center stand 190 is disposed on the right of right virtual straight line L3 in the left-right direction of body frame 110, and left grounding portion 192L is disposed on the left of left virtual straight line L4.

As a whole, right grounding portion 192R of center stand 190 can be disposed inside of region R1, and left grounding portion 192L of center stand 190 can be disposed inside of region R2 as shown in FIG. 12. However, left grounding portion 192L and right grounding portion 192R can be disposed symmetrically. Region R1 is a region surrounded by virtual straight lines L7 and L9 and right virtual straight lines L3 and L5. Region R2 is a region surrounded by virtual straight lines L7 and L9 and left virtual straight lines L4 and L6.

As shown in FIG. 12, right grounding portion 192R of center stand 190 may be disposed inside of region R1a, and left grounding portion 192L of center stand 190 may be disposed inside of region R2a. However, left grounding portion 192L and right grounding portion 192R can be disposed symmetrically. Regions R1 and R1a are regions surrounded by line segment M1, virtual straight line L9, and right virtual straight lines L3 and L5. Regions R2 and R2a are regions surrounded by line segment M1, virtual straight line L9, and left virtual straight lines L4 and L6.

It is desirable to dispose right grounding portion 192R of center stand 190 inside of region R3 and to dispose left grounding portion 192L of center stand 190 inside of region R4. However, left grounding portion 192L and right grounding portion 192R can be disposed symmetrically. Region R3 is a region in region R1 surrounded by center line L0 and virtual straight line L8 in the front-rear direction of body frame 110. Region R4 is a region in region R2 surrounded by center line L0 and virtual straight line L8 in the front-rear direction of body frame 110. Virtual straight line L8 is a line segment passing through the rear ends of left front wheel 131L and right front wheel 131R in a plan view.

According to the disposition, left grounding portion 192L and right grounding portion 192R are easily hidden under the bottom of the vehicle when center stand 190 is in the retracted position. The disposition of center stand 190 can be easily designed by disposing left grounding portion 192L and right grounding portion 192R behind the rear ends of left front wheel 131L and right front wheel 131R.

### <Advantageous Effects of Embodiment

As described, according to vehicle 100 of the present embodiment, center stand 190 is disposed so that at least left and right grounding portions 192L and 192R of center stand 190 and rear wheel 134 are grounded when center stand 190 is in the use position in vehicle 100 including tiltable body frame 110, left front wheel 131L, and right front wheel 131R. Therefore, in vehicle 100 including tiltable body frame 110, left front wheel 131L, and right front wheel 131R, center stand 190 can be used to support vehicle 100 in a mode different from when the conventional center stand is used.

According to vehicle 100 of the present embodiment, in vehicle 100 including tiltable body frame 110, left front wheel 131L, and right front wheel 131R, center stand 190 is disposed so that vehicle 100 is grounded with at least three points: right grounding portion 192R disposed on the right of right virtual straight line L1 connecting the front end of rear wheel grounding portion S2 of rear wheel 134 and the left end of right front wheel grounding portion S1R of right front wheel 131R in the left-right direction of body frame 110; left grounding portion 192L disposed on the left of left virtual straight line L2 connecting the front end of rear wheel grounding portion S2 of rear wheel 134 and the right end of left front wheel grounding portion S1L of left front wheel 131L; and rear wheel 134. Therefore, in vehicle 100 including tiltable body frame 110, left front wheel 131L, and right front wheel 131R, center stand 190 can be used to support vehicle 100 in a mode different from when conventional center stand is used.

According to vehicle 100 of the present embodiment, in vehicle 100 including tiltable body frame 110, left front wheel 131L, and right front wheel 131R, center stand 190 is disposed so that vehicle 100 is grounded with at least three points: right grounding portion 192R disposed on the right of right virtual straight line L3 in the left-right direction of body frame 110; left grounding portion 192L disposed on the left of left virtual straight line L4; and rear wheel 134. Therefore, in vehicle 100 including tiltable body frame 110, left front wheel 131L, and right front wheel 131R, center stand 190 can be used to support vehicle 100 in a mode different from when conventional center stand is used.

According to vehicle 100 of the embodiment, in vehicle 100 including tiltable body frame 110, left front wheel 131L, and right front wheel 131R, center stand 190 is disposed so that vehicle 100 is grounded with at least three points: right grounding portion 192R disposed on the right of right underframe 113b in the left-right direction of body frame 110; left grounding portion 192L disposed on the left of left underframe 113a; and rear wheel 134. Therefore, in vehicle 100 including tiltable body frame 110, left front wheel 131L, and right front wheel 131R, center stand 190 can be used to support the vehicle in a mode different from when conventional center stand is used.

According to vehicle 100 of the embodiment, in vehicle 100 including tiltable body frame 110, left front wheel 131L, and right front wheel 131R, left support post 191L and right support post 191R more widely separated than left underframe 113a and right underframe 113b of body frame 110 can support vehicle 100. Therefore, center stand 190 can be used to support vehicle 100 in a mode different from when conventional center stand is used. Since vehicle 100 includes right front wheel 131R and left front wheel 131L, an increase in size of vehicle 100 can be suppressed even if left support post 191L is disposed on the left of left underframe 113a, and right support post 191R is disposed on the right of right underframe 113b, when center stand 190 is in the retracted position. Therefore, center stand 190 different from the conventional center stand can be realized in vehicle 100 including tiltable body frame 110, left front wheel 131L, and right front wheel 131R.

According to vehicle 100 of the embodiment, in vehicle 100 including tiltable body frame 110, left front wheel 131L, and right front wheel 131R, right support post 191R and left support post 191L of center stand 190 can be retracted up to a height partially overlapping left underframe 113a or right underframe 113b in the up-down direction of body frame 110, when center stand 190 is in the retracted position. Therefore, in vehicle 100 including tiltable body frame 110, left front wheel 131L, and right front wheel 131R, suppression of the tilt angle of vehicle 100 in the left-right direction can be reduced, while left support post 191L and right support post 191R more widely separated than left underframe 113a and right underframe 113b of body frame 110 can support vehicle 100. Therefore, center stand 190 different from the conventional center stand can be realized.

According to vehicle 100 of the embodiment, in vehicle 100 including tiltable body frame 110, left front wheel 131L, and right front wheel 131R, right grounding portion 192R and left grounding portion 192L of center stand 190 are disposed forward of the front end of engine 171 of power unit 170, the front end of crankcase 172, and the front end of transmission case 173 in the front-rear direction of body frame 110, when center stand 190 is in the use position. Therefore, in vehicle 100 including tiltable body frame 110, left front wheel 131L, and right front wheel 131R, center stand 190 can be used to support vehicle 100 in a mode different from when conventional center stand is used.

According to vehicle 100 of the present embodiment, left support post 191L of center stand 190 is disposed on the left of left underframe 113a in the left-right direction of body frame 110. Right support post 191R is disposed on the right of right underframe 113b in the left-right direction of body frame 110. Therefore, left grounding portion 192L and right grounding portion 192R of center stand 190 can be more widely isolated than the width from the left side of left underframe 113a of body frame 110 to the right side of right underframe 113b. Furthermore, since link portion 194 is bent as described above, link portion 194 is unlikely to interfere with left underframe 113a and right underframe 113b when center stand 190 is in the retracted position, and the movable ranges of left support post 191L and right support post 191R are wide. Therefore, center stand 190 can be used to support vehicle 100 in a mode different from when the conventional center stand is used.

According to vehicle 100 of the present embodiment, since link mechanism 140 is disposed behind the rotation center of right front wheel 131R and the rotation center of left front wheel 131L, the center (upper axis) of the upper cross member of the link mechanism is disposed at a higher position when the center stand is in the use position, compared to when the center stand is in the retracted position. Therefore, in the vehicle including tiltable body frame, left front wheel, and right front wheel, center stand 190 can be used to support vehicle 100 in a mode different from when the conventional center stand is used.

According to vehicle 100 of the present embodiment, at least part of power unit 170 is disposed between left and right front wheel grounding portions S1L and S1R and rear wheel grounding portion S2 in the front-rear direction of body frame 110. Furthermore, left grounding portion 192L and right grounding portion 192R of center stand 190 are disposed forward of the front ends of engine 171, crankcase 172, and transmission case 173 in the front-rear direction of body frame 110, when center stand 190 is in the use position. Therefore, the center stand can be used to support the vehicle in a mode different from when the conventional center stand is used.

An embodiment of the present invention have been described thus far.

In the embodiment, left front wheel 131L, right front wheel 131R, and one rear wheel 134 are grounded when center stand 190 is in the use position. However, in the present invention, it is also possible to employ a configuration in which the center stand is disposed so that at least the right grounding portion, the left grounding portion, and the rear wheel are grounded when the center stand is in the use position. For example, left front wheel 131L and right front wheel 131R may lift up from the ground when center stand 190 is in the use position. In the configuration in which left front wheel 131L and right front wheel 131R lift up from the ground when center stand 190 is in the use position, left front wheel grounding portion S1L and right front wheel grounding portion S1R can be read as left front wheel lower end S1L and right front wheel lower end S1R.

In the description of the present embodiment, left grounding portion 192L and right grounding portion 192R are disposed forward of center line L0 of FIG. 10 in the front-rear direction of body frame 110, when center stand 190 is in the use position. However, when center stand 190 is in the use position, left grounding portion 192L and right grounding portion 192R may be disposed forward of center of gravity S0 of the time when no rider is on vehicle 100. Even in this disposition, center stand 190 can be used to support vehicle 100 in a mode different from when the conventional center stand is used.

Although center stand 190 is grounded by left grounding portion 192L and right grounding portion 192R in the embodiment, the number of grounding portions may be more than two.

In the description of the present embodiment, the power unit includes the engine, the crankcase, and the transmission case. However, the power unit may not include the engine and the crankcase but include a drive source, such as an electric motor, and a transmission.

Although link support 111 also serves as a head tube in the example described in the embodiment, a head tube may be included separately from link support 111.

The configuration of vehicle 100 and the structures of the components are specifically illustrated in the accompanying drawings in the description of the embodiment. However, the components of the vehicle are the ones included in the appended claims are sufficient as the structures of the vehicle and the components of the vehicle.

For example, the left underframe and the right underframe are adopted as the left frame portion and the right frame portion in the example described in the embodiment. However, for example, if the down frames include a left down frame and a right down frame disposed side by side in the left-right direction of the body frame, the down frames may be adopted as a left frame portion and a right frame portion.

Vehicle 100 includes floor portion 201d forward of seat 180 in a plan view in the example described in the embodiment. However, the vehicle of the present invention may be of a type that allows the driver to straddle the seat without floor portion 201d.

Link support 111 also serves as a head tube in the example described in the embodiment. However, the vehicle according to the present invention may include a heat tube separately from link support 111.

In the link mechanism according to the present invention, the upper cross member may include a front upper cross member with a part disposed forward of link support 111 and a rear upper cross member with a part disposed behind link support 111. The lower cross member may include only a front lower cross member or may include only a rear lower cross member. The link mechanism according to the present invention may include only the upper cross member and the lower cross member, and the link mechanism may also include one or a plurality of cross members disposed between the upper cross member and the lower cross member in the up-down direction of the body frame.

The present invention can be embodied by a large number of different modes. This disclosure should be construed as providing embodiments of the principle of the present invention. A large number of illustrative embodiments are described here with the understanding that the embodiments are not intended to limit the present invention to the preferred embodiments described and/or illustrated here.

Some illustrative embodiments of the present invention are described here. The present invention, which is defined by claim 1, is not limited to various preferred embodiments described here. The embodiments should be construed as non-exclusive. For example, the terms "preferably" and "may" are non-exclusive in this disclosure, meaning "preferable, but not limited to this" and "may be, but not limited to this".

### Industrial Applicability

The present invention is useful for a vehicle including a body frame and tiltable left and right front wheels.

### Reference Signs List

100 vehicle
110 body frame
111 link support
113 underframe
113a left underframe
113b right underframe
113c intermediate underframe
113d side underframe
131L left front wheel
131R right front wheel
134 rear wheel
140 link mechanism
141 upper cross member
142 lower cross member
143 left-side rod
144 right-side rod
146 left bracket
147 right bracket
150L left shock absorber
150R right shock absorber
151 left damper
152 left turn prevention mechanism
153 right damper
154 right turn prevention mechanism
160 handlebar
161 steering shaft
162 center steering arm
165 tie rod
170 power unit
171 engine
172 crankcase
173 transmission case
180 seat
201d floor portion
190 center stand
191L left support post
191R right support post
192L left grounding portion
192R right grounding portion
193L left support portion
193R right support portion
194 link portion
L0 center line
L1, L3, L5 right virtual straight lines
L2, L4, L6 left virtual straight lines
S0 center of gravity
S1L left front wheel grounding portion
S1R right front wheel grounding portion
S2 rear wheel grounding portion

## Claims

1. A vehicle comprising:
a body frame (110);
a right front wheel (131R) and a left front wheel (131L) disposed side by side in a left-right direction of the body frame (110);
a right-front-wheel support unit (150R) including an upper portion and a lower portion that supports the right front wheel (131R);
a left-front-wheel support unit (150L) including an upper portion and a lower portion that supports the left front wheel (131L);
a link mechanism (140) including
a right-side rod (144) that supports the upper portion of the right-front-wheel support unit (150R) in a manner that makes the upper portion thereof turnable around a right axis extending in an up-down direction of the body frame (110),
a left-side rod (143) that supports the upper portion of the left-front-wheel support unit (150L) in a manner that makes the upper portion thereof turnable around a left axis which is parallel to the right axis,
an upper cross member (141) including a right end portion that supports an upper part of the right-side rod (144) in a manner that makes the upper part thereof turnable, a left end portion that supports an upper part of the left-side rod (143) in a manner that makes the upper part thereof turnable, and an intermediate portion that is supported by the body frame (110) so as to be turnable around an upper axis extending in a front-rear direction of the body frame (110), and
a lower cross member (142) including a right end portion that supports a lower part of the right-side rod (144) in a manner that makes the lower part thereof turnable, a left end portion that supports a lower part of the left-side rod (143) in a manner that makes the lower part thereof turnable, and an intermediate portion that is supported by the body frame (110) so as to be turnable around a lower axis which is parallel to the upper axis,
a steering shaft (161) including an upper end portion formed above the lower axis that is a turning axis of the lower cross member (142) in the up-down direction of the body frame (110), the steering shaft (161) being supported between the right-side rod (144) and the left-side rod (143) in the left-right direction of the body frame (110) so as to be turnable around an axis extending in the up-down direction of the body frame (110) relative to the body frame (110);
a handlebar (160) that turns the steering shaft (161);
a turn transmission mechanism (146,147,162-165) that transmits the turning of the steering shaft (161) according to the turning of the handlebar (160) to the right-front-wheel support unit (150R) and the left-front-wheel support unit (150L);
a rear wheel (134);
a power unit (170) that generates driving force of the rear wheel (134);
**characterized by**
a center stand (190) including a right grounding portion (192R) and a left grounding portion (192L), the right grounding portion (192R) is disposed on the left of a right virtual straight line (L5), the left grounding portion (192L) is disposed on the right of a left virtual straight line (L6), said right virtual straight line (L5) is a straight line passing through the right end of the right front wheel (131R) and extending in the front-rear direction of the body frame (110) in a plan view with the body frame (110) in an upright state, said left virtual straight line (L6) is a straight line passing through the left end of left front wheel (131L) and extending in the front-rear direction of the body frame (110) in a plan view with the body frame (110) in an upright state, the center stand (190) being supported so as to be turnable relative to the body frame (110) and being switchable between a use position in which the right grounding portion (192R) and the left grounding portion (192L) are grounded and a retracted position in which the right grounding portion (192R) and the left grounding portion (192L) are separated from the ground, wherein
the center stand (190) is disposed so that at least the right grounding portion (192R), the left grounding portion (192L), and the rear wheel (134) are grounded when the center stand (190) is in the use position,
wherein when the center stand (190) is in the use position, the right grounding portion (192R) of the center stand (190) is disposed on the right of a right end portion virtual straight line (L3) connecting a front end of a grounding portion (S2) of the rear wheel (134) and a center left end of the right front wheel (131R) in the left-right direction of the body frame (110) in a plan view with the body frame (110) in the upright state, and
the left grounding portion (192L) of the center stand (190) is disposed on the left of a left end portion virtual straight line (L4) connecting the front end of the grounding portion (S2) of the rear wheel (134) and a center right end of the left front wheel (131L) in the left-right direction of the body frame (110) in a plan view.

2. The vehicle according to claim 1, **characterized in that** when the center stand (190) is in the use position, the right grounding portion (192R) and the left grounding portion (192L) of the center stand (190) are disposed forward of a center among a lower end of the right front wheel (131R), a lower end of the left front wheel (131L), and a rear wheel grounding portion (S2) in the front-rear direction of the body frame (110), the rear wheel grounding portion (S2) being where the rear wheel (134) is grounded.

3. The vehicle according to claim 1 or 2, **characterized in that** when the center stand (190) is in the use position, the right grounding portion (192R) and the left grounding portion (192L) of the center stand (190) are disposed forward of a center of gravity (S0) of the vehicle without a rider on the vehicle in the front-rear direction of the body frame (110).

4. The vehicle according to at least one of the claims 1 to 3, **characterized in that** the right front wheel (131R) is grounded at a right front wheel grounding portion (S1R) when the center stand (190) is in the use position, while the left front wheel (131L) is grounded at a left front wheel grounding portion (S1L) when the center stand (190) is in the use position,
when the center stand (190) is in the use position, the right grounding portion (192R) of the center stand (190) is disposed on the right of a right grounding virtual straight line (L1) connecting a front end of a grounding portion (S2) of the rear wheel (134) and a left end of the right front wheel grounding portion (S1R) in the left-right direction of the body frame (110) in a plan view with the body frame (110) in the upright state, and
the left grounding portion (192L) of the center stand (190) is disposed on the left of a left grounding virtual straight line (L2) connecting the front end of the grounding portion (S2) of the rear wheel (134) and a right end of the left front wheel grounding portion (S1L) in the left-right direction of the body frame (110).

5. The vehicle according to at least one of the claims 1 to 4, **characterized in that** the body frame (110) includes: a link support (111) that supports the link mechanism (140); a down frame (112) extending downward from the link support (111); and an underframe (113) extending backward from the down frame (112),
at least part of the down frame (112) and the underframe (113) includes a left frame portion (113a) and a right frame portion (113b) disposed side by side in the left-right direction of the body frame (110), and
when the center stand (190) is in the use position, the right grounding portion (192R) of the center stand (190) is disposed on the right of the right frame portion (113b) in the left-right direction of the body frame (110), and the left grounding portion (192L) of the center stand (190) is disposed on the left of the left frame portion (113a) in the left-right direction of the body frame (110) in a plan view.

6. The vehicle according to claim 5, **characterized in that** the center stand (190) includes:
a right support post (191R) including the right grounding portion (192R) at a lower end in the use position; a right support portion (193R) that supports the right support post (191R) in a manner that makes the right support post (191R) turnable relative to the body frame (110); a left support post (191L) including the left grounding portion (192L) at a lower end in the use position; a left support portion (193L) that supports the left support post (191L) in a manner that makes the left support post (191L) turnable relative to the body frame (110); and a link portion (194) that connects the right support post (191R) and the left support post (191L), and
when the center stand (190) is in the retracted position, the right support post (191R) of the center stand (190) is disposed on the right of the right frame portion (113b) in the left-right direction of the body frame (110), and the left support post (191L) of the center stand (190) is disposed on the left of the left frame portion (113a) in the left-right direction of the body frame (110) in a plan view of the vehicle.

7. The vehicle according to claim 6, **characterized in that** the link portion (194) of the center stand (190) is formed so that, when the center stand (190) is in the retracted position, an upper end (196Ra) of a connection portion (196R) of the right support post (191R) and the link portion (194) is positioned above a lower edge of the right frame portion (113b) in a side view, while an upper end (196Ra) of the link portion (194) positioned below the right frame portion (113b) is positioned below a lower end of the right frame portion (113b), and the upper end (196Ra) of the link portion (194) positioned below the left frame portion (113a) is positioned below a lower end of the left frame portion (113a), while an upper end (196La) of a connection portion (196L) of the left support post (191L) and the link portion (194) is positioned above a lower edge of the left frame portion (113a) in a side view in the up-down direction of the body frame (110).

8. The vehicle according to at least one of the claims 1 to 7, **characterized in that** the link mechanism (140) is disposed behind a rotation center of the right front wheel (131R) and a rotation center of the left front wheel (131L) in the front-rear direction of the body frame (110).

9. The vehicle according to at least one of the claims 1 to 8, **characterized in that** the power unit (170) includes an engine (171), a crankcase (172), and a transmission case (173), wherein
at least part of the power unit (170) is disposed between the lower ends of the right and left front wheels (131R, 131L) and a lower end of the rear wheel (134) in the front-rear direction of the body frame (110), and
when the center stand (190) is in the use position, the right grounding portion (192R) and the left grounding portion (192L) of the center stand (190) are disposed forward of a front end of the engine (171), a front end of the crankcase (172), and a front end of the transmission case (173) in the front-rear direction of the body frame (110).

## Patentansprüche

1. Ein Fahrzeug, das umfasst:
einen Körper-Rahmen (110);
ein rechtes Vorder-Rad (131R) und ein linkes Vorder-Rad (131L), die Seite an Seite in einer Links-Rechts-Richtung des Körper-Rahmens (110) positioniert sind;
eine rechte Vorder-Rad-Lager-Einheit (150R), die einen oberen Abschnitt und einen unteren Abschnitt beinhalten, welche das rechte Vorder-Rad (131R) lagern;
eine linke Vorder-Rad-Lager-Einheit (150L), die einen oberen Abschnitt und einen unteren Abschnitt beinhalten, welche das linke Vorder-Rad (131L) lagern;
einen Lenker-Mechanismus (140), der beinhaltet
einen Rechts-Seiten-Stab (144), welcher den oberen Abschnitt der rechten Vorder-Rad-Lager-Einheit (150R) in einer Weise lagert, welche den oberen Abschnitt desselben drehbar um eine rechte Achse macht, die sich in eine Oben-Unten-Richtung des Körper-Rahmens (110) erstreckt,
einen Links-Seiten-Stab (143), welcher den oberen Abschnitt der linken Vorder-Rad-Lager-Einheit (150L) in eine Weise lagert, welche den oberen Abschnitt derselben drehbar um eine linke Achse macht, die parallel zu der rechten Achse ist,
ein oberes Quer-Element (141), das einen rechten Endabschnitt, welcher einen oberen Teil des Rechts-Seiten-Stabs (144) in einer Weise lagert, welche den oberen Teil drehbar macht, einen linken Endabschnitt, welche einen oberen Teil des Links-Seiten-Stabs (143) in einer Weise lagert, welche den oberen Teil desselben drehbar macht, und einen Zwischenabschnitt, der durch den Körper-Rahmen (110) gelagert ist, sodass dieser drehbar um eine obere Achse ist, die sich in eine Vorder-Rück-Richtung des Körper-Rahmens (110) erstreckt, beinhaltet, und
ein unteres Quer-Element (142), das einen rechten Endabschnitt, welcher einen unteren Teil des Rechts-Seiten-Stabs (144) in einer Weise lagert, welche den unteren Teil desselben drehbar macht, einen linken Endabschnitt, welcher einen unteren Teil des Links-Seiten-Stabs (143) in einer Weise lagert, welche den unteren Teil derselben drehbar macht, und einen Zwischenabschnitt, der durch den Körper-Rahmen (110) gelagert ist, sodass dieser drehbar um eine untere Achse ist, die parallel zu der oberen Achse ist, beinhaltet,
eine Lenkwelle (161), die einen oberen Endabschnitt beinhaltet, der oberhalb der unteren Achse ausgebildet, welche eine Drehachse des unteren Quer-Elements (142) in der Oben-Unten-Richtung des Körper-Rahmens (110) ist, die Lenkwelle (161) ist zwischen dem Rechts-Seiten-Stab (144) und dem Links-Seiten-Stab (143) in der Links-Rechts-Richtung des Körper-Rahmens (110) gelagert, sodass diese drehbar um eine Achse ist,
die sich in der Oben-Unten-Richtung des Körper-Rahmens (110) erstreckt, relativ zu dem Körper-Rahmen (110);
eine Lenkstange (160), welche die Lenkwelle (161) dreht;
einen Dreh-Übertragungs-Mechanismus (146, 147, 162, 165), welcher die Drehung der Lenkwelle (161) gemäß der Drehung der Lenkstange (160) zu der rechten Vorder-Rad-Lager-Einheit (150R) und der linken Vorder-Rad-Lager-Einheit (150L) überträgt;
ein Hinter-Rad (134);
eine Leistungs-Einheit (170), welche Antriebskraft des Hinter-Rads (134) erzeugt;
**gekennzeichnet durch**
einen Mitten-Ständer (190), der einen rechten Boden-Berührungs-Abschnitt (192R) und einen linken Boden-Berührungs-Abschnitt (192L) beinhaltet, der rechte Boden-Berührungs-Abschnitt (192R) ist links von einer rechten virtuellen geraden Linie (L5) positioniert, der linke Boden-Berührungs-Abschnitt (192L) ist rechts von einer linken virtuellen geraden Linie (L6) positioniert, diese rechte virtuelle gerade Linie (L5) ist eine gerade Linie, die durch das rechte Ende des rechten Vorder-Rads (131R) hindurchtritt, und sich in die Vorder-Rück-Richtung des Körper-Rahmens (110) erstreckt, in einer Draufsicht mit dem Körper-Rahmen (110) in einem aufrechten Zustand, diese linke virtuelle gerade Linie (L6) ist eine gerade Linie, die durch das linke Ende des linken Vorder-Rads (131L) hindurchtritt, und sich in der Vorder-Rück-Richtung des Körper-Rahmens (110) erstreckt, in einer Draufsicht mit dem Körper-Rahmen (110) in einem aufrechten Zustand, der Mitten-Ständer (190) ist gelagert, so dass dieser relativ zu dem Körper-Rahmen (110) drehbar ist, und zwischen einer Verwendungs-Position, in welcher der rechte Boden-Berührungs-Abschnitt (192R) und der linke Boden-Berührungs-Abschnitt (192L) auf dem Boden sind, einer zurückgezogenen Position, in welcher der rechte Boden-Berührungs-Abschnitt (192R) und der linke Boden-Berührungs-Abschnitt (192L) getrennt von dem Boden sind, schaltbar, wobei
der Mitten-Ständer (190) positioniert ist, sodass zumindest der rechte Boden-Berührungs-Abschnitt (192R), der linke Boden-Berührungs-Abschnitt (192L), und das Hinter-Rad (134) auf dem Boden sind, wenn der Mitten-Ständer (190) in der Verwendungs-Position ist,
wobei, wenn der Mitten-Ständer (190) in der Verwendungs-Position ist, ist der rechte Boden-Berührungs-Abschnitt (192R) des Mitten-Ständers (190) rechts von einer Rechts-End-Abschnitt-Virtuell-Geraden-Linie (L3) positioniert, welche ein vorderes Ende eines Boden-Berührungs-Abschnitts (S2) des Hinter-Rads (134) und ein Mitten-Links-Ende des rechten Vorder-Rads (131R) in der Links-Rechts-Richtung des Körper-Rahmens (110) verbindet, in einer Draufsicht mit dem Körper-Rahmen (110) in dem aufrechten Zustand, und
der linke Boden-Berührungs-Abschnitt (192L) des Mitten-Ständers (190) ist positioniert links von einer Links-End-Abschnitt-Virtuell-Geraden-Linie (L4), welche das Vorder-Ende des Boden-Berührungs-Abschnitts S2 des Hinter-Rads (134) und ein Mitten-Rechts-Ende des linken Vorder-Rads (131L) in der Links-Rechts-Richtung des Körper-Rahmens (110) in einer Draufsicht, verbindet.

2. Das Fahrzeug gemäß Anspruch 1, **dadurch gekennzeichnet, dass**, wenn der Mitten-Ständer (190) in der Verwendungs-Position ist, sind der rechte Boden-Berührungs-Abschnitt (192R) und der linke Boden-Berührungs-Abschnitt (192L) des Mitten-Ständers (190) vor einer Mitte von einem unteren Ende des rechten Vorder-Rads (133R), einem unteren Ende des linken Vorder-Rads (131L), und einem Hinter-Rad-Boden-Berührungs-Abschnitt (S2), in der Vorder-Rück-Richtung des FahrzeugKörper-Rahmens (110), positioniert, der Hinter-Rad-Boden-Berührungs-Abschnitt (S2) ist dort, wo das Hinter-Rad (134) am Boden ist.

3. Das Fahrzeug gemäß Anspruch 1 oder 2, **dadurch gekennzeichnet, dass**, wenn der Mitten-Ständer (190) in der Verwendungs-Position ist, sind der rechte Boden-Berührungs-Abschnitt (192R) und der linke Boden-Berührungs-Abschnitt (192L) des Mitten-Ständer (190) vor einem Schwerpunkt (S0) des Fahrzeugs, ohne einem Fahrer auf dem Fahrzeug, in der Vorder-Rück-Richtung des Körper-Rahmens (110) positioniert.

4. Ein Fahrzeug gemäß zumindest einem der Ansprüche 1 bis 3, **dadurch gekennzeichnet, dass** das rechte Vorder-Rad (131) an einem rechten Vorder-Rad-Boden-Berührungs-Abschnitt (S1R) am Boden ist, wenn der Mitten-Ständer in der Verwendungs-Position ist, während das linke Vorder-Rad (131L) an einem linken Vorder-Rad-Boden-Berührungs-Abschnitt (S1L) am Boden ist, wenn der Mitten-Ständern (190) in der Verwendungs-Position ist,
wenn der Mitten-Ständer (190) in der Verwendungs-Position ist, ist der rechte Boden-Berührungs-Abschnitt (192R) des Mitten-Ständers (190) rechts von einer Rechts-Boden-Berührungs-Virtuell-Geraden-Linie (L1) positioniert, welche ein Vorder-Ende eines Boden-Berührungs-Abschnitts (S2) des Hinter-Rads (134) und ein linkes Ende des rechten Vorder-Rad-Boden-Berührungs-Abschnitts (S1R) in der Links-Rechts-Richtung des Körper-Rahmens (110) verbindet, in einer Draufsicht mit dem Körper-Rahmen (110) in dem aufrechten Zustand, und
der linke Boden-Berührungs-Abschnitt (192L) des Mitten-Ständers (190) ist links von einer Links-Boden-Berührungs-Virtuell-Geraden-Linie (L2) positioniert, welche das Vorder-Ende des Boden-Berührungs-Abschnitts (S2) des Hinter-Rades (134) und ein rechtes Ende des linken Vorder-Rad-Boden-Berührungs-Abschnitts (S1L) verbindet, in der Links-Rechts-Richtung des Körper-Rahmens (110).

5. Das Fahrzeug gemäß zumindest einem der Ansprüche 1 bis 4, **dadurch gekennzeichnet, dass** der Körper-Rahmen (110) beinhaltet: ein Lenker-Lager (111), welches den Lenker-Mechanismus (140) lagert; einen Abwärts-Rahmen (112), der sich nach unten von dem Lenker-Lager (111) erstreckt; und einen Unterzug-Rahmen (113), der sich nach hinten von dem Abwärts-Rahmen (112) erstreckt,
zumindest ein Teil des Abwärts-Rahmens (112) und des Unterzug-Rahmens (113) beinhaltet einen linken Rahmen-Abschnitt (113A) und einen rechten Rahmen-Abschnitt (113B) die Seite an Seite in der Links-Rechts-Richtung des Körper-Rahmens (110) positioniert sind, und
wenn der Mitten-Ständer (190) in der Verwendungs-Position ist, ist der rechte Boden-Berührungs-Abschnitt (192R) des Mitten-Ständers (190) rechts von dem rechten Rahmen-Abschnitt (113B) in der Links-Rechts-Richtung des Körper-Rahmens (110) positioniert, und der linke Boden-Berührungs-Abschnitt (192L) des Mitten-Ständers (190) ist links von dem linken Rahmen-Abschnitt (113A) in der Links-Rechts-Richtung des Körper-Rahmens (110) positioniert, in einer Draufsicht.

6. Das Fahrzeug gemäß Anspruch 5, **dadurch gekennzeichnet, dass** der Mitten-Ständer (190) beinhaltet: eine rechte Lager-Stange (191R), welche den rechten Boden-Berührungs-Abschnitt (192R) an einem unteren Ende beinhaltet, in der Verwendungs-Position; einen rechten Lager-Abschnitt (193R), welche die rechte Lager-Stange (191R) in einer Weise lagert, dass die rechte Lager-Stange (191R) drehbar relativ zu dem Körper-Rahmen (110) gemacht ist; eine linke Lager-Stange (191L), welche den linken Boden-Berührungs-Abschnitt (192L) an einem unteren Ende beinhaltet, in der Verwendungs-Position; einen linken Lager-Abschnitt (193L), welcher die linke Lager-Stange (191L) in einer Weise lagert, dass die linke Lager-Stange (191L) drehbar relativ zu dem Körper-Rahmen (110) gemacht ist; und
einen Lenker-Abschnitt (194), welcher die rechte Lager-Stange (191R) und die Lager-Stange (191L) verbindet, und
wenn der Mitten-Ständer (190) in der zurückgezogenen Position ist, ist die rechte Lager-Stange (191R) des Mitten-Ständers (190) rechts von dem rechten Rahmen-Abschnitt (113B) in der Links-Rechts-Richtung des Körper-Rahmens (110) positioniert, und die linke Lager-Stange (191L) des Mitten-Ständers (190) ist links von dem linken Rahmen-Abschnitt (113A) in der Links-Rechts-Richtung des Körper-Rahmens (110) positioniert, in einer Draufsicht des Fahrzeugs.

7. Das Fahrzeug gemäß Anspruch 6, **dadurch gekennzeichnet, dass** der Lenker-Abschnitt (194) des Mitten-Ständers (190) ausgebildet ist, sodass, wenn der Mitten-Ständer (190) in der zurückgezogenen Position ist, ein oberes Ende (196RA) eines Verbindungsabschnitts (196R) der rechten Lager-Stange (191R) und des Lenker-Abschnitts (194) oberhalb einer unteren Kante des rechten Rahmen-Abschnitts (113B) positioniert ist, in einer Seitenansicht, während ein oberes Ende (196RA) des Lenker-Abschnitts (194), der unterhalb des rechten Rahmen-Abschnitts (113B) positioniert ist, unterhalb eines unteren Endes des rechten Rahmen-Abschnitts (113B) positioniert ist, und das obere Ende (196RA) des Lenker-Abschnitts (194), der unterhalb des linken Rahmen-Abschnitts (113A) positioniert ist, unterhalb eines unteren Endes des linken Rahmen-Abschnitts (113A) positioniert ist, während ein oberes Ende (196LA) eines Verbindungsabschnitts (196L) der linken Lager-Stange (191L) und des Lenker-Abschnitts (194) oberhalb einer unteren Kante des linken Rahmen-Abschnitts (113A) positioniert ist, in einer Seitenansicht in der Oben-Unten-Richtung des Körper-Rahmens (110).

8. Das Fahrzeug gemäß zumindest einem der Ansprüche 1 bis 7, **dadurch gekennzeichnet, dass** der Lenker-Mechanismus (140) hinter einer Dreh-Mitte des rechten Vorder-Rades (131R) und einer Dreh-Mitte des linken Vorder-Rads (131L) in der Vorder-Rück-Richtung des Körper-Rahmens (110) positioniert ist.

9. Das Fahrzeug gemäß zumindest einem der Ansprüche 1 bis 6, **dadurch gekennzeichnet, dass** die Leistungs-Einheit (170) einen Motor (171), ein Kurbelgehäuse (172) und ein Getriebegehäuse (173) beinhaltet, wobei
zumindest ein Teil der Leistungs-Einheit (110) zwischen den unteren Enden der rechten und linken Vorderräder (131R, 131L) und einem unteren Ende des Hinter-Rads (134) in der Vorder-Rück-Richtung des Körper-Rahmens (110) positioniert ist, und
wenn der Mitten-Ständer (190) in einer Verwendungs-Position ist, sind der rechte Boden-Berührungs-Abschnitt (192R) und der linke Boden-Berührungs-Abschnitt (192L) des Mitten-Ständers (190) vor einem vorderen Ende des Motors (171), einem vorderen Ende des Kurbelgehäuses (172), und einem vorderen Ende des Getriebegehäuses (173), in der Vorder-Rück-Richtung des Körper-Rahmens (110), positioniert.

## Revendications

1. Véhicule comprenant :
un cadre (110),
une roue avant droite (131R) et une roue avant gauche (131L) disposées côte à côte dans la direction gauche droite du cadre (110),
une unité de support de roue avant droite (150R) incluant une partie supérieure et une partie inférieure qui supporte la roue avant droite (131R),
une unité de support de roue avant gauche (150L) incluant une partie supérieure et une partie inférieure qui supporte la roue avant gauche (131L),
un mécanisme de liaison (140) incluant :
une tige de côté droit (144) qui supporte la partie supérieure de l'unité de support de roue avant droite (150R) de façon à permettre à sa partie supérieure de tourner autour d'un axe droit s'étendant dans la direction haut bas du cadre (110),
une tige de côté gauche (143) qui supporte la partie supérieure de l'unité de support de roue avant gauche (150L) de façon à permettre à sa partie supérieure de tourner autour d'un axe gauche qui est parallèle à l'axe droit,
un élément transversal supérieur (141) incluant une partie terminale droite qui supporte un organe supérieur de la tige de côté droit (144) de façon à permettre à son organe supérieur de tourner, une partie terminale gauche qui supporte un organe supérieur de la tige de côté gauche (143) de façon à permettre à son organe supérieur de tourner, ainsi qu'une partie intermédiaire qui est supportée par le cadre (110) de façon à pouvoir tourner autour d'un axe supérieur s'étendant dans la direction avant arrière du cadre (110), et
un élément transversal inférieur (142) incluant une partie terminale droite qui supporte un organe inférieur de la tige de côté droit (144) de façon à permettre à son organe supérieur de tourner, une partie terminale gauche qui supporte un organe supérieur de la tige de côté gauche (143) de façon à permettre à son organe supérieur de tourner, ainsi qu'une partie intermédiaire qui est supportée par le cadre (110) de façon à pouvoir tourner autour d'un axe inférieur qui est parallèle à l'axe supérieur,
un arbre de direction (161) incluant une partie terminale supérieure formée au-dessus de l'axe inférieur qui est l'axe de rotation de l'élément transversal inférieur (142) dans la direction haut bas du cadre (110), l'arbre de direction (161) étant supporté entre la tige de côté droit (144) et la tige de côté gauche (143) dans la direction gauche droite du cadre (110) de façon à pouvoir tourner autour d'un axe s'étendant dans la direction haut bas du cadre (110) par rapport au cadre (110),
un guidon (160) qui fait tourner l'arbre de direction (161),
un mécanisme de transmission de rotation (146, 147, 162 à 165) qui transmet la rotation de l'arbre de direction (161) en fonction de la rotation du guidon (160) à l'unité de support de roue avant droite (150R) et à l'unité de support de roue avant gauche (150L),
une roue arrière (134),
une unité de puissance (170) qui génère la force d'entraînement de la roue arrière (134),
**caractérisé par**
un socle de centrage (190) incluant un organe de liaison au sol droit (192R) et un organe de liaison au sol gauche (192L), l'organe de liaison au sol droit (192R) est placé à la gauche d'une ligne droite virtuelle droite (L5), l'organe de liaison au sol gauche (192L est placé à la droite d'une ligne droite virtuelle gauche (L6), ladite ligne droite virtuelle droite (L5) étant une ligne droite traversant l'extrémité droite de la roue avant droite (131R) et s'étendant dans la direction avant arrière du cadre (110) selon une vue en plan, le cadre (110) étant vertical, ladite ligne droite virtuelle gauche (L6) étant une ligne droite traversant l'extrémité gauche de la roue avant gauche (131L) et s'étendant dans la direction avant arrière du cadre (110) selon une vue en plan, le cadre (110) étant vertical, le socle de centrage (190) étant supporté de façon à pouvoir tourner par rapport au cadre (110) et pouvant basculer entre une position d'utilisation dans laquelle l'organe de liaison au sol droit (192R) et l'organe de liaison au sol gauche (192L) sont au contact du sol et une position rétractée dans laquelle l'organe de liaison au sol droit (192R) et l'organe de liaison au sol gauche (192L) sont séparés du sol, dans lequel
le socle de centrage (190) est placé de sorte à ce qu'au moins l'organe de liaison au sol droit (192R), l'organe de liaison au sol gauche (192L) et la roue arrière (134) soient mis au contact du sol lorsque le socle de centrage (190) est en position d'utilisation,
dans lequel, lorsque le socle de centrage (190) est en position d'utilisation, l'organe de liaison au sol droit (192R) du socle de centrage (190) est placé sur la droite d'une ligne droite virtuelle de partie terminale droite (L3) reliant l'extrémité avant d'un organe de liaison au sol (S2) de la roue arrière (134) et l'extrémité gauche centrale de la roue avant droite (131R) dans la direction gauche droite du cadre (110) dans une vue en plan, le cadre (110) étant vertical, et
l'organe de liaison au sol gauche (192L) du socle de centrage (190) est placé sur la gauche d'une ligne droite virtuelle de partie terminale gauche (L4) reliant l'extrémité avant de l'organe de liaison au sol (S2) de la roue arrière (134) et l'extrémité droite centrale de la roue avant gauche (131L) dans la direction gauche droite du cadre (110) dans une vue en plan.

2. Véhicule selon la revendication 1, **caractérisé en ce que** lorsque le socle de centrage (190) se trouve dans la position d'utilisation, l'organe de liaison au sol droit (192R) et l'organe de liaison au sol gauche (192L) du socle de centrage (190) sont disposés en avant d'un centre parmi l'extrémité inférieure de la roue avant droite (131R), l'extrémité inférieure de la roue avant gauche (131L) et l'organe de liaison au sol de roue arrière (S2) dans la direction avant arrière du cadre (110), l'organe de liaison au sol de roue arrière (S2) se trouvant à l'endroit où la roue arrière (134) est mise au contact du sol.

3. Véhicule selon la revendication 1 ou la revendication 2, **caractérisé en ce que** lorsque le socle de centrage (190) se trouve en position d'utilisation, l'organe de liaison au sol droit (192R) l'organe de liaison au sol gauche (192L) du socle de centrage (190) sont placés en avant du centre de gravité (S0) du véhicule sans conducteur sur le véhicule dans la direction avant arrière du cadre (110).

4. Véhicule selon au moins l'une des revendications 1 à 3, **caractérisé en ce que** la roue avant droite (131R) est mise au contact du sol au niveau d'un organe de liaison au sol de roue avant droite (S1R) lorsque le socle de centrage (190) se trouve en position d'utilisation, alors que la roue avant gauche (131L) est mise au contact du sol au niveau d'un organe de liaison au sol de roue avant gauche (S1L) lorsque le socle de centrage (190) se trouve en position d'utilisation,
lorsque le socle de centrage (190) se trouve en position d'utilisation, l'organe de liaison au sol droit (192R) du socle de centrage (190) est placé à la droite d'une ligne droite virtuelle de liaison au sol droite (L1) reliant l'extrémité avant d'un organe de liaison au sol (S2) de la roue arrière (134) et l'extrémité gauche de l'organe de liaison au sol de roue avant droite (S1R) dans la direction gauche droite du cadre (110) dans une vue en plan, le cadre (110) étant vertical, et
l'organe de liaison au sol gauche (192L) du socle de centrage (190) est placé à la gauche d'une ligne droite virtuelle de liaison au sol gauche (L2) reliant l'extrémité avant de l'organe de liaison au sol (S2) de la roue arrière (134) et l'extrémité droite de l'organe de liaison au sol de roue avant gauche (S1L) dans la direction gauche droite du cadre (110).

5. Véhicule selon au moins l'une des revendications 1 à 4, **caractérisé en ce que** le cadre (110) inclut : un support de liaison (111) qui supporte le mécanisme de liaison (140), un cadre vers le bas (112) se déployant vers le bas à partir du support de liaison (111) et un cadre inférieur (113) s'étendant vers l'arrière à partir du cadre vers le bas (112),
une partie au moins du cadre vers le bas (112) et du cadre inférieur (113) inclut un organe de cadre gauche (113a) et un organe de cadre droit (113b) disposés côte à côte dans la direction gauche droite du cadre (110), et
lorsque le socle de centrage (190) se trouve en position d'utilisation, l'organe de liaison au sol droit (192R) du socle de centrage (190) est placé à la droite de l'organe de cadre droit (113b) dans la direction gauche droite du cadre (110) et l'organe de liaison au sol gauche (192L) du socle de centrage (190) est placé à la gauche de l'organe de cadre gauche (113a) dans la direction gauche droite du cadre (110) dans une vue en plan.

6. Véhicule selon la revendication 5, **caractérisé en ce que** le socle de centrage (190) inclut : une colonne de support droit (191R) incluant l'organe de liaison au sol droit (192R) à l'extrémité inférieure dans la position d'utilisation, une partie de support droit (193R) qui supporte la colonne de support droit (191R) de façon à permettre à la colonne de support droit (191R) de tourner par rapport au cadre (110) ; une colonne de support gauche (191L) incluant l'organe de liaison au sol gauche (192L) à l'extrémité inférieure en position d'utilisation, un organe de support gauche (193L) qui supporte la colonne de support gauche (191L) de façon à permettre à la colonne de support gauche (191L) de tourner par rapport au cadre (110) ; ainsi qu'un organe de liaison (194) qui relie la colonne de support droit (191R) à la colonne de support gauche (191L), et
lorsque le socle de centrage (190) se trouve en position rétractée, la colonne de support droit (191R) du socle de centrage (190) est placée à la droite de l'organe de cadre droit (113b) dans la direction gauche droite du cadre (110) et la colonne de support gauche (191L) du socle de centrage (190) est placée à la gauche de l'organe de cadre gauche (113a) dans la direction gauche droite du cadre (110) dans une vue en plan du véhicule.

7. Véhicule selon la revendication 6, **caractérisé en ce que** l'organe de liaison (194) du socle de centrage (190) est formé de telle sorte que lorsque le socle de centrage (190) se trouve en position rétractée, l'extrémité supérieure (196Ra) de l'organe de raccordement (196R) de la colonne de support droit (191R) et de l'organe de liaison (194) est positionnée au-dessus de la bordure inférieure de l'organe de cadre droit (113b) dans une vue latérale, alors que l'extrémité supérieure (196Ra) de l'organe de liaison (194), placée en dessous de l'organe de cadre droit (113b), est positionnée en dessous de l'extrémité inférieure de l'organe de cadre gauche (113a), alors que l'extrémité supérieure (196La) d'un organe de raccordement (196L) de la colonne de support gauche (191L) et de l'organe de liaison (194) est positionnée au-dessus de la bordure inférieure de l'organe de cadre gauche (113a) dans une vue latérale dans la direction haut bas du cadre (110).

8. Véhicule selon au moins l'une des revendications 1 à 7, **caractérisé en ce que** le mécanisme de liaison (140) est placé derrière le centre de rotation de la roue avant droite (131R) et derrière le centre de rotation de la roue avant gauche (131L dans la direction avant arrière du cadre (110) .

9. Véhicule selon au moins l'une des revendications 1 à 8, **caractérisé en ce que** l'unité de puissance (170) inclut un moteur thermique (171), un carter moteur (172) et un carter de transmission (173), dans lequel
au moins une partie de l'unité de puissance (170) est placée entre les extrémités inférieures des roues avant droite et gauche (131R, 131L) et l'extrémité inférieure de la roue arrière (134) dans la direction avant arrière du cadre (110), et
lorsque le socle de centrage (190) se trouve en position d'utilisation, l'organe de liaison au sol droit (192R) et l'organe de liaison au sol gauche (192L) du socle de centrage (190) sont disposés en avant de l'extrémité avant du moteur (171), de l'extrémité avant du carter moteur (172) et de l'extrémité avant du carter de transmission (173) dans la direction avant arrière du cadre (110) .
